# EUROPEAN PATENT APPLICATION

(11) **EP 4 599 982 A1**
(43) Date of publication of application: **13.08.2025**
(21) Application number: 25155758.3
(22) Date of filing: 04.02.2025
(51) Int. Cl.: B23Q 3/155, B23Q 3/157, B23Q 37/00

(54) **MACHINE TOOL**

(30) Priority: 07.02.2024 JP 2024017156
(71) Applicant: Star Micronics Co., Ltd., Shizuoka-shi, Shizuoka 422-8654 (JP)
(72) Inventor: Matsuda, Takumi, Shizuoka-shi, Shizuoka (JP)
(74) Representative: Grünecker Patent- und Rechtsanwälte PartG mbB

(57) **Abstract**

Provided is a machine tool which can be reduced in size and to which a tool magazine can easily be added.

A machine tool includes a tool spindle on which a tool for machining a workpiece is mounted exchangeably, a tool housing apparatus having a standard tool magazine in which a plurality of tools to be mounted on the tool spindle are housed, and a tool exchanging apparatus having a tool exchange arm that grips the tool, and a first moving mechanism that uses a Z-axis rack and a pinion meshed to the Z-axis rack to move the tool exchange arm in a +Z direction, wherein the tool exchanging apparatus includes a thin plate part for attaching an extension member that extends a movement stroke of the tool exchange arm in the +Z direction, and the tool housing apparatus includes a rotation shaft projecting portion for attaching an additional tool magazine that increases the number of housed tools to the +Z direction side of the standard tool magazine.

## Description

### CROSS-REFERENCES

The application claims priority of Japanese Patent Application No. 2024-017156 filed on February 7, 2024. The contents of this application are incorporated herein by reference in their entirety.

### BACKGROUND OF THE INVENTION

### 1. Field of the Invention

The present invention relates to a machine tool having a tool housing apparatus and a tool exchanging apparatus.

### 2. Description of the Related Art

A known machine tool includes a tool housing apparatus having a tool magazine, and a tool exchanging apparatus for exchanging a tool housed in the tool magazine with a tool mounted on a spindle (see Japanese Patent No. 4970761 or the like, for example). The tool exchanging apparatus described in Japanese Patent No. 4970761 executes a tool exchange operation for removing a tool mounted on a tool spindle and mounting a tool removed from a tool magazine on the tool spindle by moving a tool exchange arm with a feed screw in an axial direction of the feed screw. Japanese Patent No. 4970761 also discloses a machine tool in which a second tool magazine is installed alongside a first tool magazine in order to house a large number of tools in the tool housing apparatus. When two tool magazines are provided side by side, the tool exchanging apparatus can exchange the tools housed respectively in the first tool magazine and the second tool magazine by moving between the first tool magazine and the second tool magazine in accordance with the rotation of the feed screw.

### SUMMARY OF THE INVENTION

However, in the machine tool described in Japanese Patent No. 4970761, including the first tool magazine and the second tool magazine, the tool exchanging apparatus is moved between the first tool magazine and the second tool magazine by the feed screw, and therefore the feed screw is increased in length, with the result that when the feed screw is rotated, a so-called jumping phenomenon, in which the feed screw bends, can easily occur. Furthermore, when the second tool magazine is not installed in the machine tool described in Japanese Patent No. 4970761, a problem occurs in that the feed screw is unnecessarily long and a movement space is provided for the tool exchanging apparatus, with the result that the machine tool increases in size. On the other hand, by using a short feed screw in the machine tool in which the second tool magazine is not installed, the machine tool can be reduced in size, but in this case, when the second tool magazine is added, an extremely complicated operation must be performed to remove the feed screw used up to that point and attach a longer feed screw.

The present invention has been designed in consideration of the problems described above, and an object thereof is to provide a machine tool which can be reduced in size and to which a tool magazine can easily be added.

A machine tool of the present invention, for solving the problems described above, includes:
a tool spindle on which a tool for machining a workpiece is mounted exchangeably;
a tool housing apparatus having a standard tool magazine in which a plurality of tools to be mounted on the tool spindle are housed; and
a tool exchanging apparatus having a tool exchange arm that grips the tool, and a first moving mechanism that uses a rack and a pinion meshed to the rack to move the tool exchange arm in a first movement direction,
wherein the tool exchanging apparatus includes an extension member attachment unit for attaching an extension member that extends a movement stroke of the tool exchange arm in the first movement direction, and
the tool housing apparatus includes an additional magazine attachment unit for attaching an additional tool magazine that increases the number of housed tools to the first movement direction side of the standard tool magazine.

According to this machine tool, when the additional tool magazine is not provided, a size reduction can be achieved, and when the additional tool magazine is added, the movement stroke of the tool exchanging apparatus can easily be extended by attaching the extension member, and thus the additional tool magazine can easily be added.

Here, when the extension member is attached to the tool exchanging apparatus and the additional tool magazine is attached to the tool housing apparatus, the tool exchange arm may be configured to remove tools from each of the standard tool magazine and the additional tool magazine. Moreover, the extension member may be configured to include an extension rack that is joined to the rack.

In this machine tool,
the tool spindle may execute a gripping movement operation for moving toward the tool exchange arm and causing the tool exchange arm to grip the tool mounted on the tool spindle.

Thus, even when the movement accuracy of the tool exchange arm is low, the tool can be gripped by adjusting the movement position of the tool spindle during the gripping movement operation, and as a result, the tool exchanging apparatus can be constructed at low cost.

Here, the tool spindle may be configured to execute a removing movement operation for removing the tool gripped by the tool exchange arm during the gripping movement operation from the tool spindle. The tool spindle may also be configured to execute a mounting movement operation for mounting a tool extracted from the tool housing apparatus and gripped by the tool exchange arm on the tool spindle. The tool spindle may be configured to execute the mounting movement operation on the tool exchange arm while the tool exchange arm is stationary. Similarly, the tool spindle may be configured to execute the removing movement operation on the tool exchange arm while the tool exchange arm is stationary.

In this machine tool,
the tool exchanging apparatus may include a second moving mechanism for moving the tool exchange arm in a second movement direction that intersects the first movement direction, and the second moving mechanism may move the tool exchange arm in the second movement direction using a fluid pressure cylinder.

By using the fluid pressure cylinder, the tool exchanging apparatus can be constructed at low cost.

In this machine tool,
the tool exchange arm may include an arm rotation shaft that is driven to rotate, and a first gripping unit and a second gripping unit that are fixed to the arm rotation shaft so as to each grip a tool,
the first gripping unit may project in a radial direction of the arm rotation shaft, and the second gripping unit may project in the radial direction at an angular interval of less than 180 degrees from the first gripping unit in a rotation direction of the arm rotation shaft.

Thus, when a tool removed from the tool housing apparatus and the tool mounted on the tool spindle are exchanged, the rotation angle of the arm rotation shaft is small, and therefore the tools can be exchanged quickly.

Here, the first gripping unit may be configured to grip a tool removed from the standard tool magazine, and the second gripping unit may be configured to grip the tool mounted on the tool spindle.

In this machine tool,
the tool housing apparatus may include a magazine rotation shaft that rotates the standard tool magazine when driven to rotate, and
the additional magazine attachment unit may be formed on the magazine rotation shaft.

By rotating the magazine rotation shaft, the standard tool magazine and the additional tool magazine can both be rotated.

Here, a magazine motor for driving the magazine rotation shaft to rotate may be provided, and the magazine motor may be configured to drive the additional tool magazine to rotate together with the standard tool magazine.

According to the present invention, it is possible to provide a machine tool which can be reduced in size and to which a tool magazine can easily be added.

### BRIEF DESCRIPTION OF THE DRAWINGS

FIG. 1 is a perspective view showing the main internal configuration of a machine tool according to an embodiment;
FIG. 2 is a perspective view showing a tool housing apparatus and a tool exchanging apparatus shown in FIG. 1;
FIG. 3 is an exploded perspective view showing a support, a tool magazine, and a magazine drive mechanism of the tool housing apparatus shown in FIG. 2;
FIG. 4 is a sectional view showing the tool housing apparatus shown in FIG. 2 and an additional tool magazine prior to attachment;
FIG. 5 is a similar sectional view to FIG. 4, showing the tool housing apparatus with the additional tool magazine attached;
FIG. 6 is a perspective view showing the tool housing apparatus and the tool exchanging apparatus shown in FIG. 1 from the opposite side to FIG. 1;
FIG. 7 is a perspective view showing the tool exchanging apparatus shown in FIG. 2 from the opposite side to FIG. 2;
FIG. 8 is a perspective view showing a basic configuration of the tool exchanging apparatus shown in FIG. 2, and an extension member;
FIG. 9 is a perspective view showing how the extension member is attached to the tool exchanging apparatus shown in FIG. 2;
FIG. 10 is a flowchart showing a tool exchange operation;
FIGS. 11A and 11B are a plan view and a right-side view showing a tool spindle, the tool housing apparatus, and the tool exchanging apparatus upon completion of a preparatory step;
FIGS. 12A and 12B are a plan view and a right-side view showing how the tool spindle is brought close to a tool exchange arm positioned in an exchange position by moving the tool spindle in a Z3-axis direction during the tool exchange operation;
FIGS. 13A and 13B are a plan view and a right-side view showing how the tool exchange arm, which is stopped in the exchange position, is caused to grip a tool mounted on the tool spindle by moving the tool spindle in a Y3-axis direction during the tool exchange operation;
FIGS. 14A and 14B are a plan view and a right-side view showing how the tool mounted on the tool spindle is removed by moving the tool spindle in the Z3-axis direction during the tool exchange operation;
FIGS. 15A and 15B are a plan view and a right-side view showing how an arm rotation shaft is rotated during the tool exchange operation;
FIGS. 16A and 16B are a plan view and a right-side view showing how a tool removed from the tool housing apparatus is mounted on the tool spindle by moving the tool spindle in the Z3-axis direction during the tool exchange operation;
FIGS. 17A and 17B are a plan view and a right-side view showing how the tool spindle is separated from the tool exchange arm by moving the tool spindle in the Y3-axis direction during the tool exchange operation;
FIGS. 18A and 18B are a plan view and a right-side view showing how the arm rotation shaft moves in a Z-axis direction while rotating during the tool exchange operation;
FIGS. 19A and 19B are a plan view and a right-side view showing how the tool exchange arm moves in a Y-axis direction during the tool exchange operation;
FIGS. 20A and 20B are a plan view and a right-side view showing how the tool removed from the tool spindle is inserted into a pod of the tool magazine by moving the tool exchange arm in the Z-axis direction during the tool exchange operation;
FIGS. 21A and 21B are a plan view and a right-side view showing how the tool exchange arm releases the tool removed from the tool spindle by moving in the Y-axis direction during the tool exchange operation;
FIGS. 22A and 22B are a plan view and a right-side view showing how the tool magazine rotates as the arm rotation shaft rotates during the tool exchange operation;
FIGS. 23A and 23B are a plan view and a right-side view showing how the tool exchange arm grips a tool housed in the tool magazine by moving in the Y-axis direction during the tool exchange operation;
FIGS. 24A and 24B are a plan view and a right-side view showing how the tool exchange arm removes the tool from the tool magazine by moving in the Z-axis direction during the tool exchange operation;
FIGS. 25A and 25B are a plan view and a right-side view showing how the tool exchange arm separates from the tool magazine by moving in the Y-axis direction during the tool exchange operation;
FIG. 26 is a flowchart showing steps S31 to S38 of a tool exchange operation performed in a machine tool having the tool housing apparatus to which the additional tool magazine is attached and the tool exchanging apparatus to which the extension member is attached;
FIG. 27 is a flowchart showing steps S39 to S50 of the tool exchange operation performed in the machine tool having the tool housing apparatus to which the additional tool magazine is attached and the tool exchanging apparatus to which the extension member is attached;
FIG. 28 is a flowchart showing steps S51 to S60 of the tool exchange operation performed in the machine tool having the tool housing apparatus to which the additional tool magazine is attached and the tool exchanging apparatus to which the extension member is attached;
FIGS. 29A and 29B are a plan view and a right-side view showing how, during the tool exchange operation performed in the machine tool with the additional tool magazine attached, the tool exchange arm gripping the tool that was mounted on the tool spindle moves to a position opposing the additional tool magazine in the Z-axis direction; and
FIGS. 30A and 30B are a plan view and a right-side view showing how, during the tool exchange operation performed in the machine tool with the additional tool magazine attached, the tool magazine rotates as the arm rotation shaft rotates.

### DESCRIPTION OF THE PREFERRED EMBODIMENTS

An embodiment of the present invention will be described below with reference to the figures.

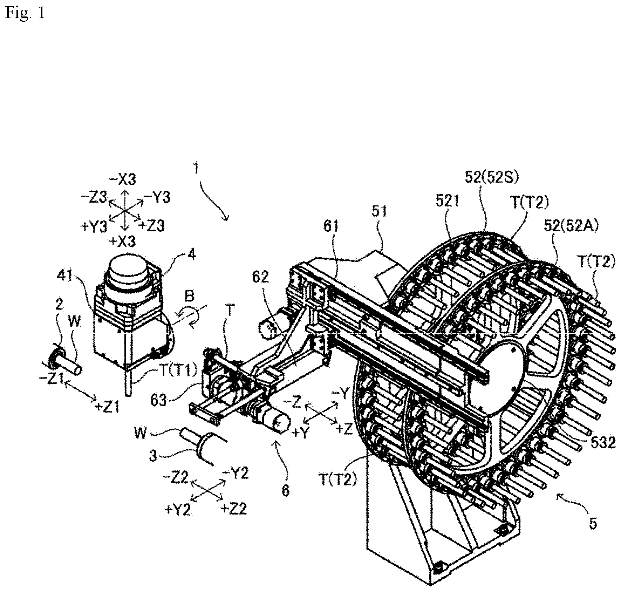

FIG. 1 is a perspective view showing the main internal configuration of a machine tool according to this embodiment.

As shown in FIG. 1, a machine tool 1 is a numerical control (NC) lathe including a spindle 2, an opposite spindle 3, a tool spindle 4, a tool housing apparatus 5, and a tool exchanging apparatus 6. Operations of the spindle 2, the opposite spindle 3, the tool spindle 4, the tool housing apparatus 5, and the tool exchanging apparatus 6 are controlled by a control apparatus, not shown in the figure.

The control apparatus operates the machine tool 1 in accordance with an NC program stored in a storage apparatus and operations performed using an operating unit, not shown in the figure.

The spindle 2 moves in a Z1-axis direction in response to a signal from the control apparatus. The Z1-axis direction is a horizontal direction, and a direction linking the upper left to the lower right in FIG. 1. The spindle 2 releasably grips an elongated rod-shaped workpiece W inserted into the interior thereof. Axial directions of the spindle 2 and the workpiece W are aligned, and are both the Z1-axis direction. A spindle motor, not shown in the figure, such as a built-in motor rotates upon reception of a signal from the control apparatus, whereby the spindle 2 rotates about the axis of the spindle 2. Accordingly, the workpiece W gripped by the spindle 2 rotates about the axis of the workpiece W.

The opposite spindle 3 moves in a Z2-axis direction and a Y2-axis direction in response to a signal from the control apparatus. The Z2-axis direction is the same direction as the Z1-axis direction described above. The Y2-axis direction is a horizontal direction that is orthogonal to the Z2-axis direction. The opposite spindle 3 releasably grips the workpiece W, which has been cut from a base side by cut-off processing and passed thereto from the spindle 2. The axial direction of the opposite spindle 3 matches the axial direction of the spindle 2 and also matches the axial direction of the workpiece W gripped by the opposite spindle 3. A spindle motor, not shown in the figure, such as a built-in motor rotates upon reception of a signal from the control apparatus, whereby the opposite spindle 3 rotates about the axis of the opposite spindle 3. Accordingly, the workpiece W gripped by the opposite spindle 3 rotates about the axis of the workpiece W.

The tool spindle 4 moves in an X3-axis direction, a Y3-axis direction, and a Z3-axis direction in response to a signal from the control apparatus. Furthermore, the tool spindle 4 performs B-axis swiveling using the Y3-axis direction as a swiveling center direction in response to a signal from the control apparatus. The X3-axis direction is a vertical direction. The Y3-axis direction is the same direction as the Y2-axis direction described above. Further, the Z3-axis direction is the same direction as the Z1-axis direction and the Z2-axis direction described above. Hereinafter, movement by the tool spindle 4 along the Y3-axis direction toward the lower left in FIG. 1 may be referred to as +Y3 movement, and movement by the tool spindle 4 along the Y3-axis direction toward the upper right in FIG. 1 may be referred to as -Y3 movement. Furthermore, movement by the tool spindle 4 along the Z3-axis direction toward the lower right in FIG. 1 may be referred to as +Z3 movement, and movement by the tool spindle 4 along the Z3-axis direction toward the upper left in FIG. 1 may be referred to as -Z3 movement. Movement and B-axis swiveling by the tool spindle 4 in the X3-axis direction, the Y3-axis direction, and the Z3-axis direction are respectively executed by a servo motor, not shown in the figure, that is controlled by the control apparatus.

A tool T such as a drill or an end mill for machining the workpiece W is mounted exchangeably on the tool spindle 4. FIG. 1 shows how the tool T is mounted on the tool spindle 4. Hereinafter, the tool T mounted on the tool spindle 4 may be referred to as a mounted tool T1. The tool spindle 4 has a tool spindle motor 41 for rotating the mounted tool T1. The tool spindle motor 41 is driven in response to a signal from the control apparatus, whereby the mounted tool T1 rotates. As a result of the movement and B-axis swiveling of the tool spindle 4 in the respective axial directions, the workpiece W can be machined by the mounted tool T1 both when gripped by the spindle 2 and when gripped by the opposite spindle 3.

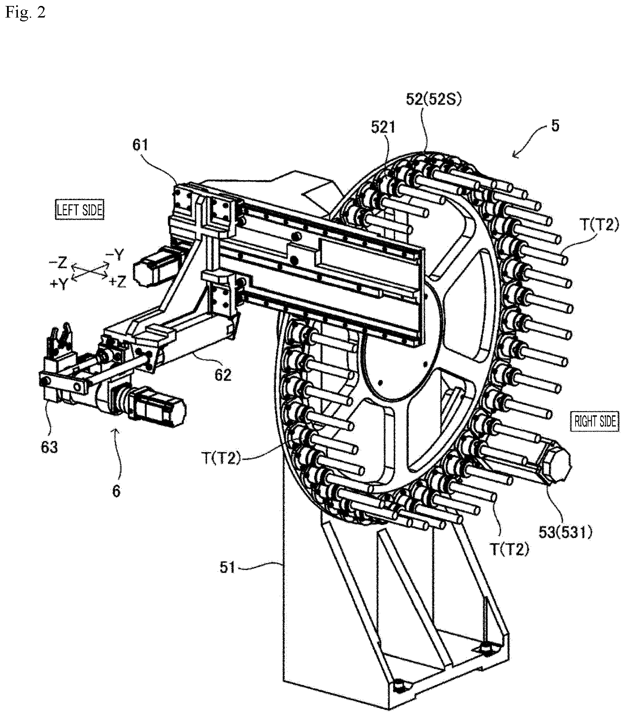

The tool housing apparatus 5 includes a support 51, a tool magazine 52, and a magazine drive mechanism 53 (see FIG. 2). The support 51 is fixed to a frame of the machine tool 1.

FIG. 2 is a perspective view showing the tool housing apparatus 5 and the tool exchanging apparatus 6 shown in FIG. 1. FIG. 2 shows basic configurations of the tool housing apparatus 5 and the tool exchanging apparatus 6.

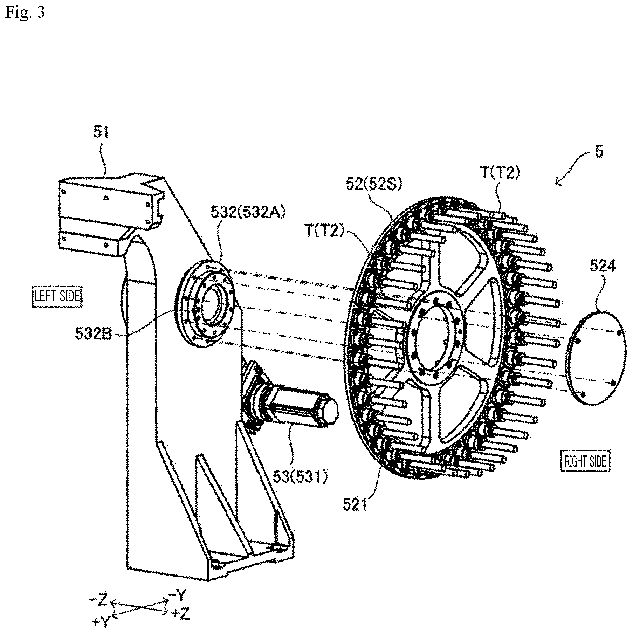

As shown in FIGS. 1 and 2, the tool magazine 52 is supported rotatably by the support 51 via a magazine rotation shaft 532 (see FIG. 3), to be described below. The tool magazine 52 is roughly disc-shaped, and a plurality of pods 521 are provided near the edge of the disc shape and arranged in a circumferential direction. The pods 521 house the tools T that are mounted on the tool spindle 4, and one tool T is housed in each pod 521. The tool housing apparatus 5 shown in FIG. 1 is provided with two tool magazines 52, namely a tool magazine 52 disposed on the support 51 side and an additionally provided tool magazine 52. As shown in FIG. 2, however, in the basic configuration of the tool housing apparatus 5, the additionally provided tool magazine 52 is not provided. The additionally provided tool magazine 52 is added when the number of tools T is insufficient with the tool magazine 52 disposed on the support 51 side alone. Hereinafter, the tool magazine 52 disposed on the support 51 side may be referred to as a standard tool magazine 52S, and the additionally provided tool magazine 52 may be referred to as an additional tool magazine 52A. Further, a tool T housed in the standard tool magazine 52S or the additional tool magazine 52A may be referred to as a housed tool T2. In addition, the pods 521 of the additional tool magazine 52Amay be referred to as additional pods 521A.

As shown in FIG. 2, the magazine drive mechanism 53 includes a magazine motor 531 and a drive transmission mechanism for transmitting drive force from the magazine motor 531 to the tool magazine 52. The configuration of the magazine drive mechanism 53 will be described hereinafter.

The tool exchanging apparatus 6 includes a first moving mechanism 61, a second moving mechanism 62, and a tool exchange arm 63.

The first moving mechanism 61 is a mechanism for moving the tool exchange arm 63 in a Z-axis direction in response to a signal from the control apparatus. The Z-axis direction is the same direction as the Z1-axis direction, the Z2-axis direction, and the Z3-axis direction, described above. Hereinafter, movement of the tool exchange arm 63 along the Z-axis direction toward the lower right in FIG. 1 may be referred to as +Z movement, and movement of the tool exchange arm 63 along the Z-axis direction toward the upper left in FIG. 1 may be referred to as -Z movement. Of the Z-axis directions, the direction of the +Z movement of the tool exchange arm 63 corresponds to an example of a first movement direction. Further, the side to which the tool exchange arm 63 moves as a result of the +Z movement may be referred to as the right side, and the side to which the tool exchange arm 63 moves as a result of the -Z movement may be referred to as the left side. FIG. 1 shows the first moving mechanism 61 in a state in which the movement stroke of the tool exchange arm 63 has been extended. As shown in FIG. 2, however, in the basic configuration of the tool exchanging apparatus 6, the movement stroke of the tool exchange arm 63 is not extended. When the additional tool magazine 52A is added, the movement stroke of the tool exchange arm 63 is extended.

The second moving mechanism 62 is a mechanism for moving the tool exchange arm 63 in a Y-axis direction in response to a signal from the control apparatus. The Y-axis direction is the same direction as the Y2-axis direction and the Y3-axis direction, described above, and corresponds to an example of a second movement direction. Note that as long as the Y-axis direction intersects the X-axis direction, the directions do not have to be orthogonal. Hereinafter, movement of the tool exchange arm 63 along the Y-axis direction toward the lower left in FIG. 1 may be referred to as +Y movement, and movement of the tool exchange arm 63 along the Y-axis direction toward the upper right in FIG. 1 may be referred to as -Y movement. The second moving mechanism 62 and the tool exchange arm 63 are both moved in the Z-axis direction by the first moving mechanism 61.

The tool exchange arm 63 moves in the Z-axis direction and the Y-axis direction while gripping a tool T removed from the tool spindle 4 or a tool T removed from the tool magazine 52. Further, the tool exchange arm 63 rotates using the Z-axis direction as a rotation center direction in response to a signal from the control apparatus. FIGS. 1 and 2 show a state in which the tool exchange arm 63 is gripping the tool T removed from the tool magazine 52 and waiting in an exchange position where the tool T is to be exchanged between the tool exchange arm 63 and the tool spindle 4.

Next, the configuration of the tool housing apparatus 5 will be described in detail.

FIG. 3 is an exploded perspective view showing the support 51, the tool magazine 52, and the magazine drive mechanism 53 of the tool housing apparatus 5 shown in FIG. 2.

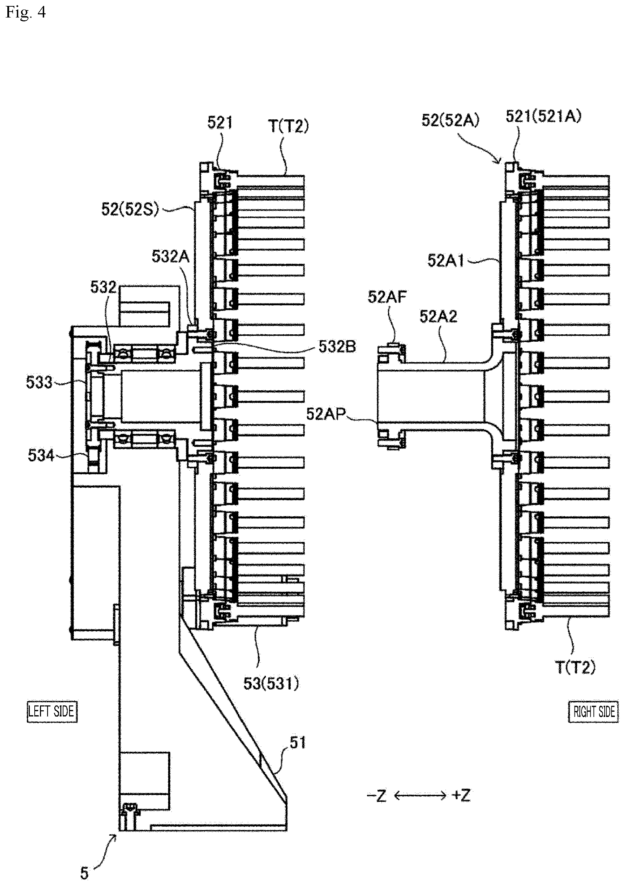

As shown in FIG. 3, the magazine drive mechanism 53 is attached to the support 51. The magazine drive mechanism 53 includes the magazine motor 531, the magazine rotation shaft 532, a magazine pulley 533 (see FIG. 4), and a timing belt 534 (see FIG. 4).

The magazine motor 531 is a servo motor controlled by the control apparatus, and is fixed to the support 51. The magazine rotation shaft 532 is a cylindrical body that rotates the tool magazine 52, and is supported by the support 51 so as to be free to rotate.

The magazine rotation shaft 532 is rotated by driving the magazine motor 531. A right-side end portion of the magazine rotation shaft 532 has a stepped shape on which a rotation shaft flange 532A and a rotation shaft projecting portion 532B that has a smaller diameter than the rotation shaft flange 532A and projects toward the right side from the rotation shaft flange 532A are formed. The rotation shaft projecting portion 532B corresponds to an example of an additional magazine attachment unit for attaching the additional tool magazine 52A (see FIG. 1). 10 screw holes are formed in a right end surface of the rotation shaft flange 532A at intervals in a circumferential direction. Similarly, 10 screw holes are formed in a right end surface of the rotation shaft projecting portion 532B at intervals in a circumferential direction.

A hole having a slightly larger inner diameter than the outer diameter of the rotation shaft projecting portion 532B is formed in a central part of the standard tool magazine 52S. By fitting the rotation shaft projecting portion 532B into this hole, the standard tool magazine 52S and the magazine rotation shaft 532 are positioned in a direction other than a rotation direction. Further, as shown by dot-dash lines in FIG. 3, the standard tool magazine 52S is fixed to the magazine rotation shaft 532 by being screwed thereto using the screw holes formed in the rotation shaft flange 532A.Note that when the standard tool magazine 52S is fixed to the magazine rotation shaft 532, a jig is used to fix relative angles of the standard tool magazine 52S and the magazine rotation shaft 532 in the rotation direction of the magazine rotation shaft 532. Thus, the standard tool magazine 52S is fixed to the magazine rotation shaft 532 so as to have a predetermined angular relationship therewith.

In the basic configuration of the tool housing apparatus 5, a magazine cap 524 is fixed by screwing to a right end surface central part of the standard tool magazine 52S. By providing the magazine cap 524, chips, cutting oil, and so on can be prevented from infiltrating the magazine rotation shaft 532. Note that when the additional tool magazine 52A (see FIG. 1) is added, the magazine cap 524 is removed from the standard tool magazine 52S and fixed to a right end surface central part of the additional tool magazine 52A.

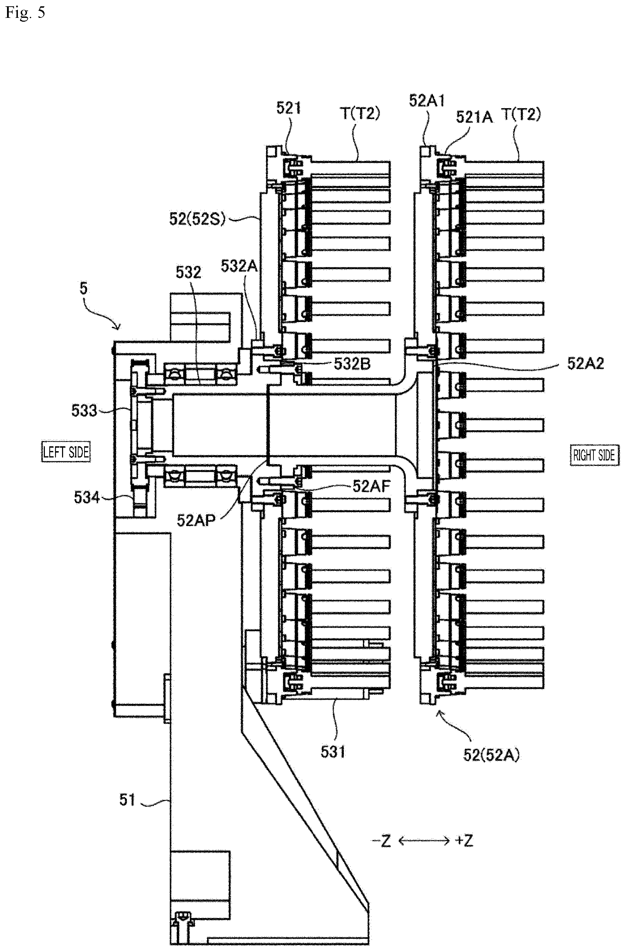

FIG. 4 is a sectional view showing the tool housing apparatus 5 shown in FIG. 2 and the additional tool magazine 52A prior to attachment. Further, FIG. 5 is a similar sectional view to FIG. 4, showing the tool housing apparatus 5 with the additional tool magazine 52A attached. Note that FIGS. 4 and 5 show vertical cross-sections passing through the center of the magazine rotation shaft 532. Further, in FIGS. 4 and 5, shading indicating the cross-section has not been added.

As shown in FIGS. 4 and 5, the additional tool magazine 52A is attached to the right side of the standard tool magazine 52S. The additional tool magazine 52A is constituted by an additional magazine body 52A1 having the same shape as the standard tool magazine 52S, and an additional shaft 52A2. The additional magazine body 52A1 and the additional shaft 52A2 are joined by a screw. Note that the additional magazine body 52A1 may have a different shape from the standard tool magazine 52S, but by forming the magazines in the same shape, an increase in types of components can be suppressed. An additional shaft flange 52AF is formed on a left end part of the additional shaft 52A2, and an additional shaft projecting portion 52AP projecting toward the left side is formed in a central part. The inner diameter of the rotation shaft projecting portion 532B of the magazine rotation shaft 532 is formed to be slightly larger than the additional shaft projecting portion 52AP.

When the additional tool magazine 52A is attached, the additional tool magazine 52A and the magazine rotation shaft 532 are positioned in a direction other than the rotation direction by inserting and fitting the additional shaft projecting portion 52AP inside the rotation shaft projecting portion 532B. Holes are formed in positions of the additional shaft flange 52AF corresponding to the screw holes in the rotation shaft projecting portion 532B of the magazine rotation shaft 532. By fastening screws to the screw holes in the rotation shaft projecting portion 532B through these holes, the additional tool magazine 52A is fixed to the magazine rotation shaft 532. In this embodiment, when the additional tool magazine 52A is attached, a central axis of the standard tool magazine 52S and a central axis of the additional tool magazine 52A match. Note, however, that the central axes may be disposed in different positions.

Note that when the additional tool magazine 52A is attached to the magazine rotation shaft 532, a jig is used to fix relative rotation angles of the additional tool magazine 52A and the magazine rotation shaft 532 in the rotation direction of the magazine rotation shaft 532. As described above, the standard tool magazine 52S is also fixed after determining the rotation angle thereof relative to the magazine rotation shaft 532, and therefore, when the additional tool magazine 52A is added, the relative angles of the standard tool magazine 52S and the additional tool magazine 52A in the rotation direction of the magazine rotation shaft 532 have a predetermined angular relationship.

As described above, the magazine rotation shaft 532 is supported by the support 51 to be free to rotate via a ball bearing. The magazine pulley 533 is fixed to a left-side end portion of the magazine rotation shaft 532. The timing belt 534 is wrapped around the magazine pulley 533.

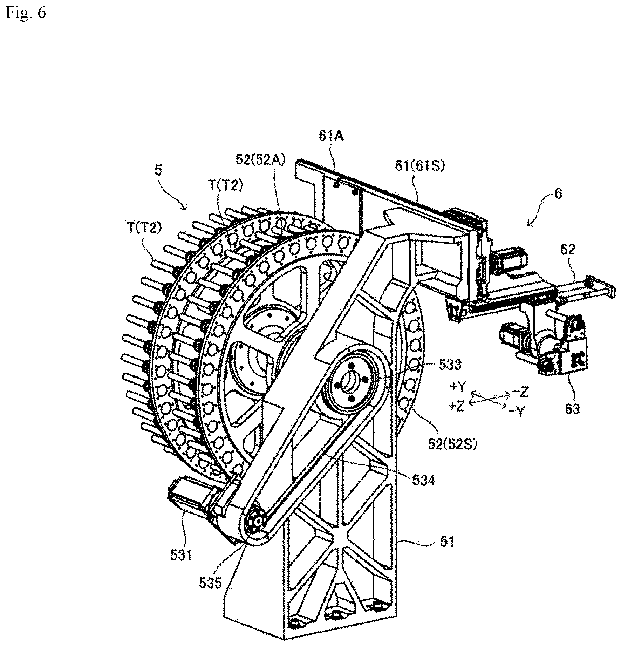

FIG. 6 is a perspective view showing the tool housing apparatus 5 and the tool exchanging apparatus 6 shown in FIG. 1 from the opposite side to FIG. 1. Note that FIG. 6 shows the tool housing apparatus 5 with the additional tool magazine 52A attached. Further, FIG. 6 shows the tool exchanging apparatus 6 with the movement stroke of the tool exchange arm 63 extended.

As shown in FIG. 6, a motor pulley 535 is fixed to an output shaft of the magazine motor 531. The timing belt 534 is wrapped around the motor pulley 535. When the magazine motor 531 is driven, drive force is transmitted by the timing belt 534 such that the standard tool magazine 52S rotates together with the magazine rotation shaft 532 (see FIG. 4). Further, when the additional tool magazine 52A has been added, the additional tool magazine 52A also rotates. In other words, the standard tool magazine 52S and the additional tool magazine 52A are rotated by a common drive source. As a result, the machine tool 1 can be constructed at low cost. Moreover, when the additional tool magazine 52A is added, no labor is required to attach a drive transmission mechanism for driving the additional tool magazine 52A, making the operation for adding the additional tool magazine 52A easy. However, a drive source and a drive transmission mechanism for the additional tool magazine 52A may be attached, and a support for the additional tool magazine 52A may be attached.

Next, the configuration of the tool exchanging apparatus 6 will be described in detail.

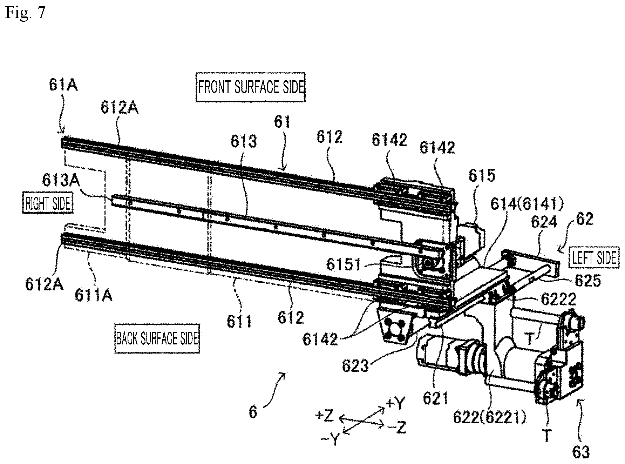

FIG. 7 is a perspective view showing the tool exchanging apparatus 6 shown in FIG. 2 from the opposite side to FIG. 2. FIG. 7 shows the tool exchanging apparatus 6 in which the movement stroke of the tool exchange arm 63 has been extended by attaching an extension member 61A. Further, FIG. 7 shows a state in which the tool exchange arm 63 is gripping two tools T.

As shown in FIG. 7, the first moving mechanism 61 includes a guide plate 611, two Z-axis linear guides 612, a Z-axis rack 613, a Z-axis moving platform 614, and a Z-axis motor 615.

The guide plate 611 is fixed to the support 51 (see FIG. 2). The guide plate 611 has a roughly rectangular plate shape with long sides extending in the Z-axis direction. In FIG. 7, the guide plate 611 is shown in transparent form by dot-dot-dash lines.

The two Z-axis linear guides 612 and the Z-axis rack 613 are fixed to a front surface of the guide plate 611. Note that the front surface of the guide plate 611 is a +Y-side surface of the guide plate 611. The Z-axis linear guides 612 are fixed to the respective vicinities of an upper edge and a lower edge of the guide plate 611 so as to extend in the Z-axis direction.

The Z-axis rack 613 is fixed to the guide plate 611 between the two Z-axis linear guides 612 so as to extend in the Z-axis direction. In other words, the Z-axis rack 613 extends parallel to the Z-axis linear guides 612. Further, the Z-axis rack 613 is slightly shorter than the Z-axis linear guides 612 on the +Z side. Teeth are formed continuously in the Z-axis direction along the lower surface of the Z-axis rack 613.

The Z-axis moving platform 614 includes a Z-axis base 6141 and four Z-axis linear blocks 6142. The Z-axis base 6141 is roughly formed in a plate shape bent into an L shape when viewed in the +Z direction. The Z-axis linear blocks 6142 are fixed to a back surface side of the Z-axis base 6141. Note that the back surface of the Z-axis base 6141 is the -Y-side surface of the Z-axis base 6141. Two of the four Z-axis linear blocks 6142 are fitted to the Z-axis linear guide 612 disposed near the upper edge of the guide plate 611, and the remaining two Z-axis linear blocks 6142 are fitted to the Z-axis linear guide 612 disposed near the lower edge of the guide plate 611.The Z-axis moving platform 614 is guided by the Z-axis linear guides 612 and the Z-axis linear blocks 6142 so as to be free to move in the Z-axis direction.

The Z-axis motor 615 is a servo motor fixed to the Z-axis base 6141. A pinion 6151 is fixed to an output shaft of the Z-axis motor 615. The pinion 6151 is meshed to the Z-axis rack 613. When the pinion 6151 is rotated by driving the Z-axis motor 615, the Z-axis moving platform 614 moves in the Z-axis direction together with the Z-axis motor 615. The second moving mechanism 62 and, via the second moving mechanism 62, the tool exchange arm 63 are held on the Z-axis moving platform 614, and thus the Z-axis moving platform 614, the second moving mechanism 62, and the tool exchange arm 63 move integrally in the Z-axis direction.

In the basic configuration of the tool exchanging apparatus 6, in which the movement stroke of the tool exchange arm 63 is not extended, the extension member 61A is not attached. The extension member 61Ais for extending the movement stroke of the tool exchange arm 63. When the additional tool magazine 52Ais attached to the magazine rotation shaft 532, as shown in FIG. 5, the extension member 61A is attached to a right end part of the guide plate 611. As shown in FIG. 7, the extension member 61A includes an extension plate 611A, two extension guides 612A, and an extension rack 613A.

The extension plate 611A roughly takes the shape of a rectangular plate with long sides extending in the Z-axis direction, although upper and lower central parts of a right-side end portion are recessed toward the left side. In FIG. 7, the extension plate 611A is shown in transparent form by dot-dot-dash lines. The two extension guides 612A and the extension rack 613A are fixed to a front surface of the extension plate 611A.

The extension guides 612A are fixed to the respective vicinities of an upper edge and a lower edge of the extension plate 611A so as to extend in the Z-axis direction. The extension rack 613Ais fixed to the extension plate 611A between the two extension guides 612A so as to extend in the Z-axis direction. In other words, the extension guides 612A and the extension rack 613A extend in parallel. Similar teeth to those of the Z-axis rack 613 are formed on a lower surface of the extension rack 613A.

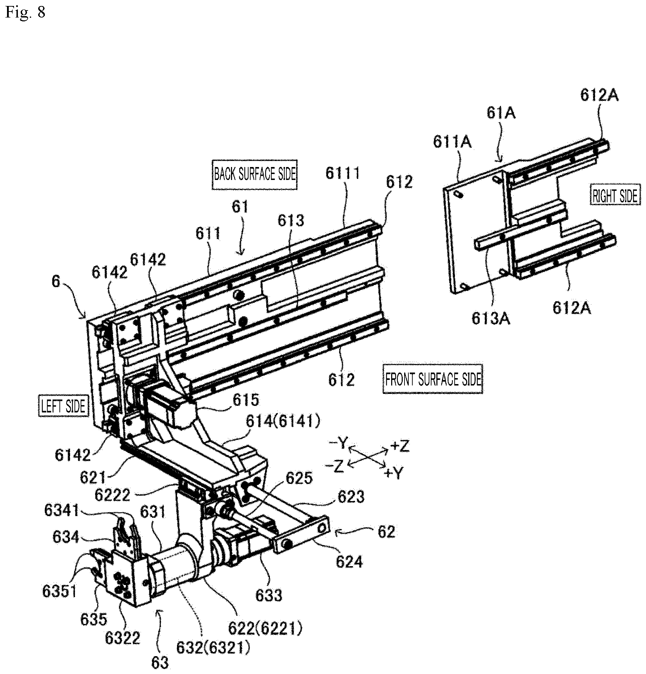

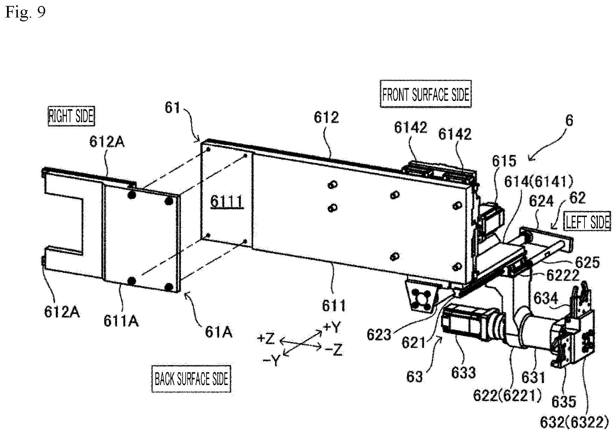

FIG. 8 is a perspective view showing the basic configuration of the tool exchanging apparatus 6 shown in FIG. 2, and the extension member 61A. Further, FIG. 9 is a perspective view showing how the extension member 61A is attached to the tool exchanging apparatus 6 shown in FIG. 2.

As shown in FIG. 8, the extension plate 611A is formed in a plate shape having a step in an intermediate part in a left-right direction, whereby a left-side part is positioned in the -Y direction relative to a right-side part. Holes penetrating in the Y-axis direction are formed in the four corners of the left-side part. FIG. 8 shows a state in which screws have been passed through these holes.

The two extension guides 612A are disposed on the left-side part of the extension plate 611A. The extension guides 612A are fixed to the extension plate 611A by screwing. A right-side part of the extension rack 613A, which forms approximately 2/3 of the extension rack 613A, is disposed on the right-side part of the extension plate 611A, and the extension rack 613A is screwed to the extension plate 611A in this part. The remaining part of the extension rack 613A, which forms approximately 1/3 of the extension rack 613A, projects toward the left side such that a gap exists in the Y-axis direction between this part and the left-side part of the extension plate 611A.

As shown in FIG. 9, a thin plate part 6111 with a thin plate thickness is formed on a right end part of the guide plate 611. The thin plate part 6111 corresponds to an example of an extension member attachment unit for attaching the extension member 61A. Screw holes are formed in the four corners of the thin plate part 6111.

When the extension member 61A is attached to the tool exchanging apparatus 6 having the basic configuration, the thin plate part 6111 is fitted into the gap between the left-side part of the extension plate 611A and the part of the extension rack 613A that projects toward the left side. Then, by fastening the screws passed through the holes in the extension plate 611A respectively to the screw holes in the four corners of the thin plate part 6111, the extension member 61A is fixed to the guide plate 611. Further, by screwing the projecting part of the extension rack 613A to the guide plate 611 from the front surface of the guide plate 611, the extension member 61A is fixed more securely to the guide plate 611.

As shown in FIG. 7, by fixing the extension member 61A to the guide plate 611, right end surfaces of the extension guides 612A abut against right end surfaces of the Z-axis linear guides 612, whereby the Z-axis linear guide 612 and the extension guide 612A form a continuous linear guide with a long movement stroke in the Z-axis direction. In other words, the movement stroke of the Z-axis moving platform 614 toward the +Z side is extended compared to when the extension member 61A is not fixed to the guide plate 611. The second moving mechanism 62 and, via the second moving mechanism 62, the tool exchange arm 63 are attached to the Z-axis moving platform 614, and therefore, by attaching the extension guide 612A, the movement stroke of the second moving mechanism 62 and the tool exchange arm 63 is also extended together with the Z-axis moving platform 614. As a result, the tool exchange arm 63 can be moved to a position where the housed tools T2 housed in the additional tool magazine 52A (see FIG. 1) can be removed. Furthermore, by fixing the extension member 61A to the guide plate 611, the Z-axis rack 613 and the extension rack 613A form a continuous rack with a long movement stroke. Note that when the extension member 61A is attached to the tool exchanging apparatus 6 having the basic configuration, the extension member 61A is preferably fixed to the guide plate 611 by screwing the extension member 61A to the guide plate 611 after establishing a fixed relative positional relationship therebetween using a jig.

The second moving mechanism 62 includes a Y-axis linear guide 621, a Y-axis moving platform 622, an air cylinder 623, a connecting plate 624, and a connecting bar 625. The Y-axis linear guide 621 is fixed to the lower surface of the Z-axis moving platform 614 so as to extend in the Y-axis direction. The Y-axis moving platform 622 includes a Y-axis base 6221 and a Y-axis linear block 6222. The Y-axis base 6221 is formed roughly in a vertically inverted L shape when viewed in the -Y direction. The Y-axis linear block 6222 is fixed to an upper end of the Y-axis base 6221. The Y-axis linear block 6222 is fitted to the Y-axis linear guide 621. The Y-axis base 6221 is guided by the Y-axis linear guide 621 and the Y-axis linear block 6222 so as to be free to move in the Y-axis direction. The tool exchange arm 63 is held on the lower end of the Y-axis base 6221 such that the Y-axis base 6221 and the tool exchange arm 63 move integrally in the Y-axis direction.

The air cylinder 623 is fixed to a lower surface of the guide plate 611. The air cylinder 623 is an actuator that causes a piston rod to project in the +Y direction and retreat in the -Y direction by air pressure. The air cylinder 623 corresponds to an example of a fluid pressure cylinder. Note that another fluid pressure cylinder, such as a hydraulic cylinder, or another actuator, such as a motor, may be used instead of the air cylinder.

The connecting plate 624 is a rectangular plate material that is fixed to a tip end of the piston rod of the air cylinder 623. One end of the connecting plate 624 in a longitudinal direction is fixed to the piston rod tip end, and a tip end of the connecting bar 625 is fixed to the other end. The other end of the connecting bar 625 is fixed to the Y-axis base 6221. Thus, when the air cylinder 623 is driven such that the piston rod is caused to project in the +Y direction, the Y-axis moving platform 622 and the tool exchange arm 63 perform a +Y movement, and when the piston rod is caused to retreat in the -Y direction, the Y-axis moving platform 622 and the tool exchange arm 63 perform a -Y movement.

As shown in FIG. 8, the tool exchange arm 63 includes an arm cylinder 631, an arm rotation shaft 632, an arm motor 633, a first gripping unit 634, and a second gripping unit 635. The arm cylinder 631 is a cylindrical body fixed to a lower end part of the Y-axis base 6221. The arm rotation shaft 632 is constituted by a shaft portion 6321 and a gripping base portion 6322. The shaft portion 6321 is formed in a columnar shape with an axial direction in the -Z direction. The shaft portion 6321 is held by the arm cylinder 631 inside the arm cylinder 631 so as to be free to rotate. The gripping base portion 6322 is fixed to a left end of the shaft portion 6321. The shaft portion 6321 is connected to an output shaft of the arm motor 633. By driving the arm motor 633, the arm rotation shaft 632 rotates using the Z-axis direction as a rotation center direction.

A base part of the first gripping unit 634 is fixed to the gripping base portion 6322, whereby the first gripping unit 634 projects from the gripping base portion 6322 in a radial direction of the arm rotation shaft 632. A pair of first gripping claws 6341 for gripping the tool T are provided on a projecting end part of the first gripping unit 634. The pair of first gripping claws 6341 are capable of swinging in a direction in which projecting ends thereof separate from each other. The pair of first gripping claws 6341 are biased by a spring, not shown in the figure, in a direction in which the projecting ends thereof approach each other so that when no external force is applied, the projecting ends of the pair of first gripping claws 6341 are maintained in a closed state shown in FIG. 8 with a predetermined interval therebetween.

The second gripping unit 635 projects from the gripping base portion 6322 in the radial direction of the arm rotation shaft 632 in a position rotated 90 degrees relative to the first gripping unit 634 in the axial direction of the arm rotation shaft 632. A base part of the second gripping unit 635 is fixed to the gripping base portion 6322. Note that the first gripping unit 634 and the second gripping unit 635 are disposed in identical positions in the Z-axis direction. Apart from having a different projection direction, the second gripping unit 635 has an identical configuration to the first gripping unit 634, and a pair of second gripping claws 6351 for gripping the tool T are provided on a projecting end part of the second gripping unit 635. The projection direction of the second gripping unit 635 preferably has an angular interval of less than 180 degrees, and more preferably 90 degrees or less, relative to the projection direction of the first gripping unit 634 in the rotation direction of the arm rotation shaft 632. The rotation angle of the arm rotation shaft 632 when a tool T removed from the tool housing apparatus 5 and the mounted tool T1 mounted on the tool spindle 4 are exchanged is equal to the angular interval between the projection direction of the first gripping unit 634 and the projection direction of the second gripping unit 635, and therefore, by reducing this angular interval, the rotation angle of the arm rotation shaft 632 during the tool exchange operation is reduced. As a result, the mounted tool T1 mounted on the tool spindle 4 and the tool T removed from the tool housing apparatus 5 can be exchanged quickly.

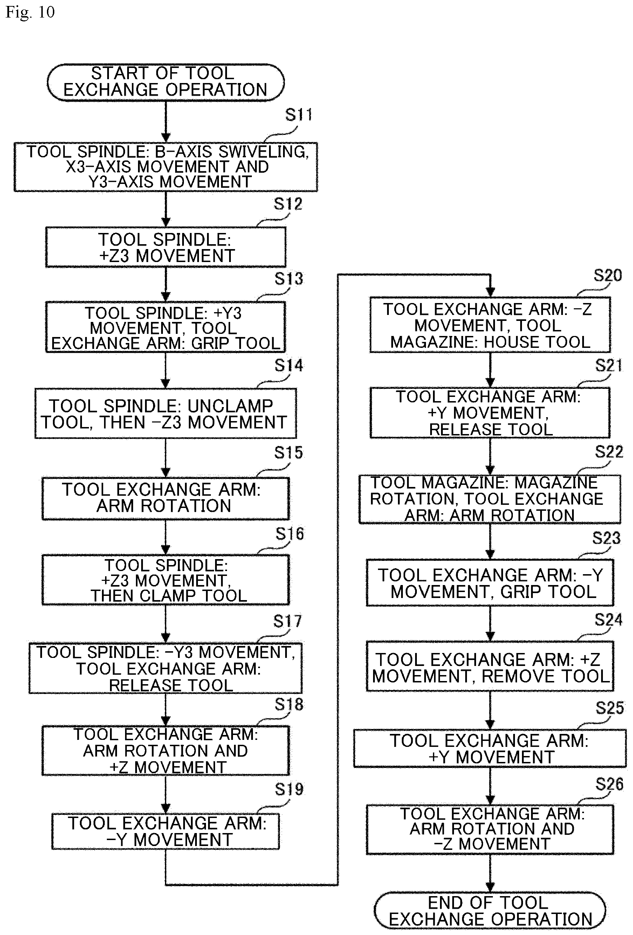

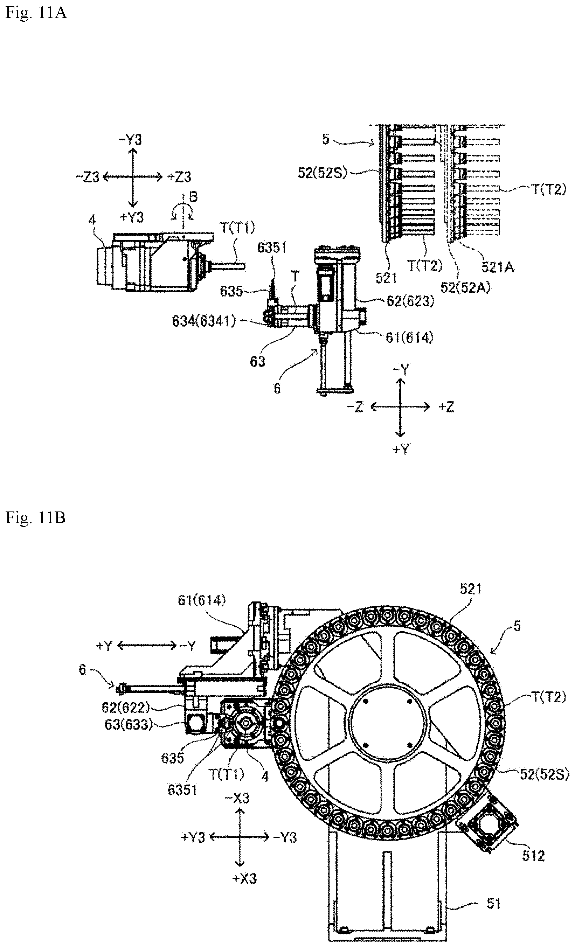

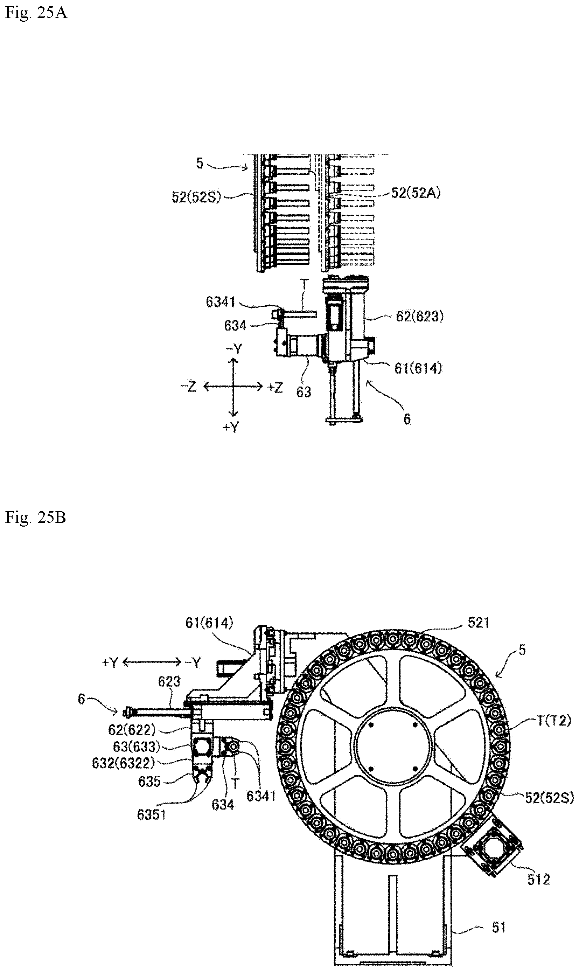

FIG. 10 is a flowchart showing the tool exchange operation. The tool exchange operation is executed by the control apparatus by operating the machine tool 1 in accordance with the NC program. The tool exchange operation performed in the machine tool 1 having the basic configuration will be described below using the flowchart of FIG. 10 and the plan views and right-side views of FIGS. 11A and 11B to 25A and 25B.

While the machine tool 1 executes machining using the mounted tool T1, the tool exchange arm 63 removes the tool T to be used for the next machining from the tool housing apparatus 5 and then waits in the exchange position where the tool T is to be exchanged between the tool exchange arm 63 and the tool spindle 4. An operation for removing the tool T from the tool housing apparatus 5 and an operation for moving to the exchange position and waiting will be described in detail hereinafter.

As shown in FIG. 10, in the tool exchange operation, as a preparatory step, the tool spindle 4 is caused to perform B-axis swiveling and to move in the X3-axis direction and the Y3-axis direction (step S11). More specifically, the tool spindle 4 performs B-axis swiveling so that the tip end of the mounted tool T1 mounted on the tool spindle 4 faces the +Z direction. Further, the tool spindle 4 moves in the X3-axis direction to a position where a center height of the mounted tool T1 matches a center height of the pair of second gripping claws 6351, and moves in the Y3-axis direction to a position spaced apart from the second gripping claws 6351 by a predetermined interval in the Y3-axis direction. Note that in a case where the B-axis swiveling results in a positional relationship in which the tip end of the mounted tool T1 and the tool exchange arm 63 contact each other, the movement in the Y3-axis direction is executed before the B-axis swiveling.

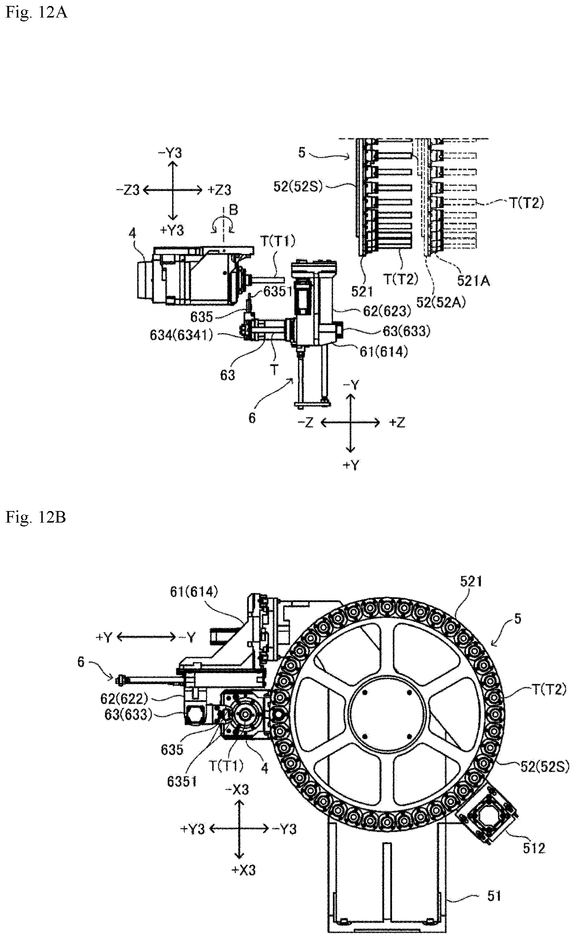

FIG. 11A is a plan view showing the tool spindle 4, the tool housing apparatus 5, and the tool exchanging apparatus 6 at the end of the preparatory step, and FIG. 11B is a right-side view of FIG. 11A. In FIG. 11A, only the tool magazine 52 of the tool housing apparatus 5 is shown, and the first moving mechanism 61 (see FIG. 7) of the tool exchanging apparatus 6 has been omitted. Note that in FIG. 11A, the additional tool magazine 52A is shown by dot-dot-dash lines. Likewise in the plan views of FIGS. 12A and 11B to 25A and 25B, to be described below, only the tool magazine 52 of the tool housing apparatus 5 is shown, the first moving mechanism 61 of the tool exchanging apparatus 6 has been omitted, and the additional tool magazine 52A is shown by dot-dot-dash lines. As shown in FIGS. 11A and 11B, in the tool exchange arm 63 waiting in the exchange position, the first gripping unit 634 is in an attitude projecting in the -X direction (an upward direction) and the second gripping unit 635 is in an attitude projecting in the -Y direction (a rearward direction). At this time, the first gripping unit 634 is gripping a tool T removed from the standard tool magazine 52S. Further, the second gripping unit 635 is not gripping a tool T.

When the preparatory step is complete, the tool spindle 4 performs a +Z3 movement (step S12). FIG. 12A is a plan view showing how the tool spindle 4 approaches the tool exchange arm 63 positioned in the exchange position by performing a +Z3 movement in step S12, and FIG. 12B is a right-side view of FIG. 12A. As shown in FIGS. 12A and 12B, when step S12 is complete, a gripped part of the mounted tool T1 mounted on the second gripping unit 635 is positioned in a position spaced apart from the second gripping claws 6351 in the Y-axis direction and facing the second gripping claws 6351 in the Y-axis direction.

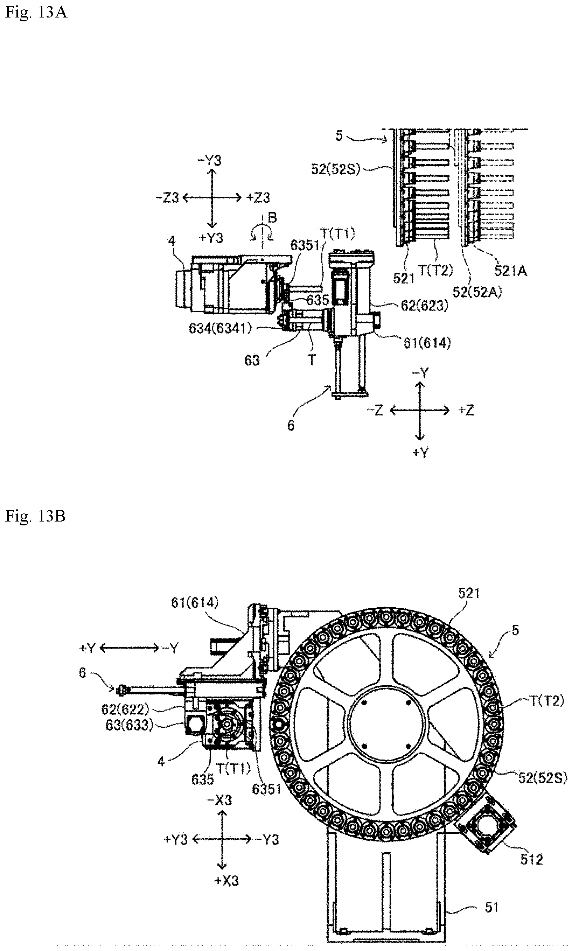

Next, the tool spindle 4 performs a +Y3 movement such that the second gripping unit 635 grips the mounted tool T1 (step S13). FIG. 13A is a plan view showing how the second gripping unit 635 of the tool exchange arm 63, which is stopped in the exchange position, grips the mounted tool T1 mounted on the tool spindle 4 as a result of the +Y3 movement performed by the tool spindle 4 in step S13, and FIG. 13B is a right-side view of FIG. 13A. Midway through the +Y3 movement of the tool spindle 4 in step S13, the gripped portion of the mounted tool T1 comes into contact with the projecting ends of the second gripping claws 6351 and pushes the projecting ends open such that the gripped portion of the mounted tool T1 enters the gap between the pair of second gripping claws 6351. Following a further +Y3 movement by the tool spindle 4, the gripped portion is positioned further toward the +Y direction than the projecting ends of the second gripping claws 6351, and as a result, as shown in FIGS. 13A and 13B, the mounted tool T1 is gripped by the second gripping claws 6351 of the second gripping unit 635. Steps S12 and S13 correspond to an example of a gripping movement operation.

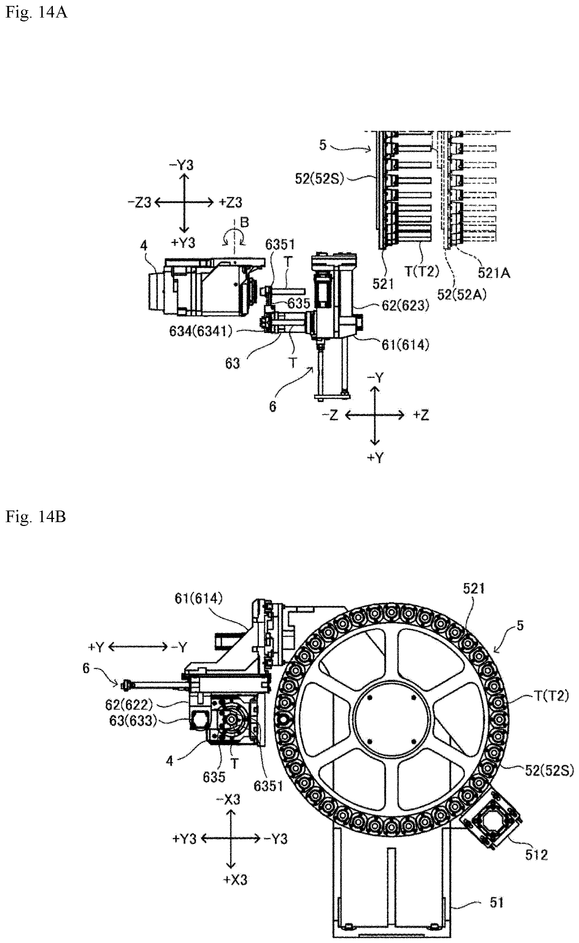

When gripping of the mounted tool T1 by the second gripping unit 635 is complete, the tool spindle 4 unclamps the mounted tool T1 and then performs a -Z3 movement (step S14). FIG. 14A is a plan view showing how the tool T is removed from the tool spindle 4 as a result of the -Z3 movement performed by the tool spindle 4 in step S14, and FIG. 14B is a right-side view of FIG. 14A. As shown in FIGS. 14A and 14B, when step S14 is complete, a gap is formed in the Z-axis direction between the tip end of the tool spindle 4 on which the tool T was mounted and the removed tool T. Step S14 corresponds to an example of a removing movement operation.

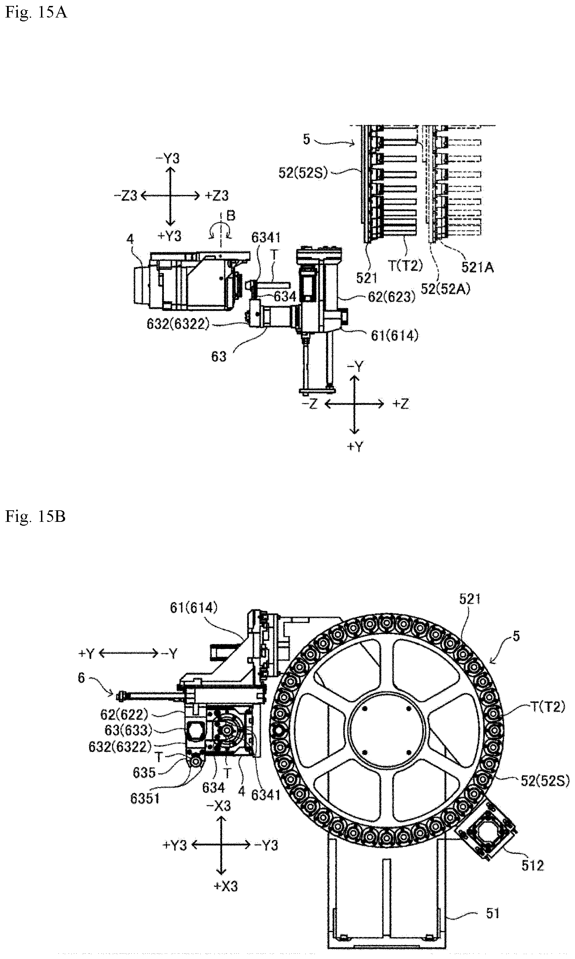

When step S14 is complete, the arm rotation shaft 632 of the tool exchange arm 63 rotates (step S15). FIG. 15A is a plan view showing how the arm rotation shaft 632 rotates in step S15, and FIG. 15B is a right-side view of FIG. 15A. As shown in FIGS. 15A and 15B, in step S15, the arm rotation shaft 632 rotates 90 degrees clockwise in FIG. 15B. As a result, the tool T removed from the tool housing apparatus 5 and gripped by the first gripping unit 634 is disposed in a position facing the tip end of the tool spindle 4 in the Z-axis direction.

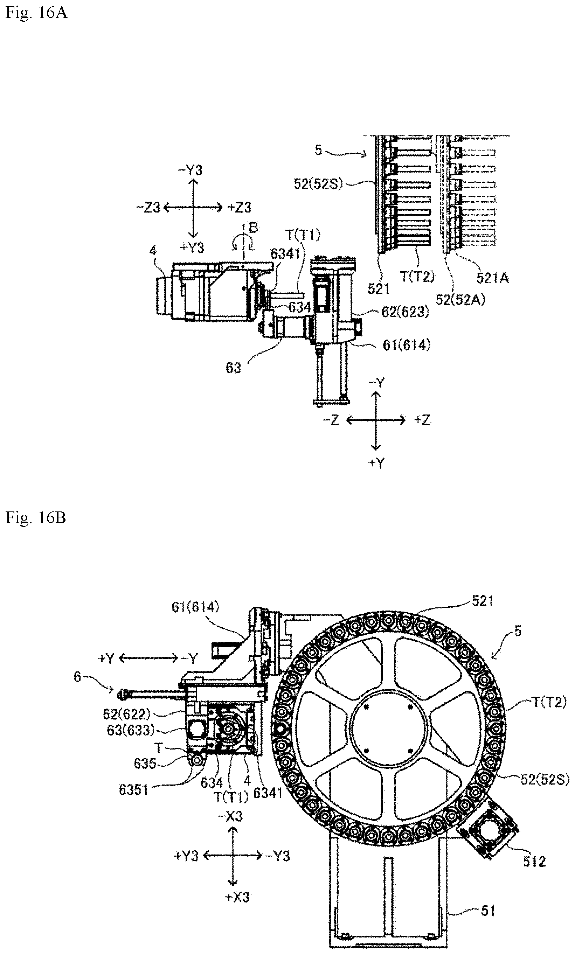

Next, the tool spindle 4 performs a +Z3 movement such that a shank of the tool T gripped by the first gripping unit 634 is inserted into a tip end side of the tool spindle 4, whereupon the tool T is clamped (step S16). FIG. 16A is a plan view showing how the tool T removed from the tool housing apparatus 5 is mounted on the tool spindle 4 as a result of the +Z3 movement performed by the tool spindle 4 in step S16, and FIG. 16B is a right-side view of FIG. 16A. As shown in FIGS. 16A and 16B, when step S16 is complete, the tool T gripped by the first gripping unit 634 is clamped by the tool spindle 4 such that a new mounted tool T1 is mounted on the tool spindle 4. Step S16 corresponds to an example of a mounting movement operation.

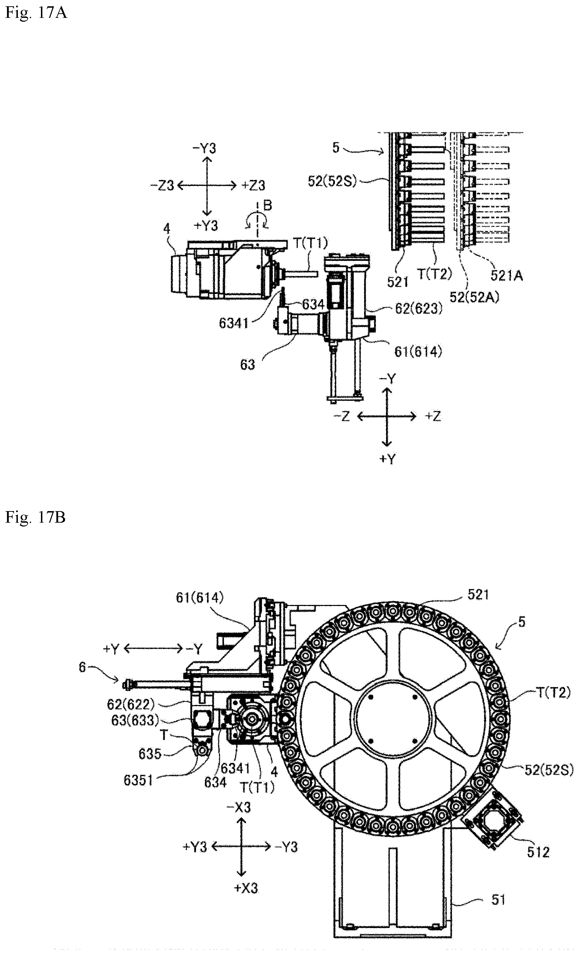

When step S16 is complete, the tool spindle 4 performs a -Y3 movement in order to release the mounted tool T1 from the first gripping unit 634 (step S17). FIG. 17A is a plan view showing how the tool spindle 4 is separated from the tool exchange arm 63 as a result of the - Y3 movement performed by the tool spindle 4 in step S17, and FIG. 17B is a right-side view of FIG. 17A. As shown in FIGS. 17A and 17B, when step S17 is complete, the mounted tool T1 is separated from the first gripping unit 634 in the Y-axis direction.

When step S17 is complete, the tool spindle 4 starts the next machining using the new mounted tool T1. In parallel with the machining, the tool exchanging apparatus 6 houses the used tool T removed from the tool spindle 4 in the tool housing apparatus 5 and executes an operation to remove a new tool T to be used in the machining executed next from the tool housing apparatus 5 and then move to the exchange position.

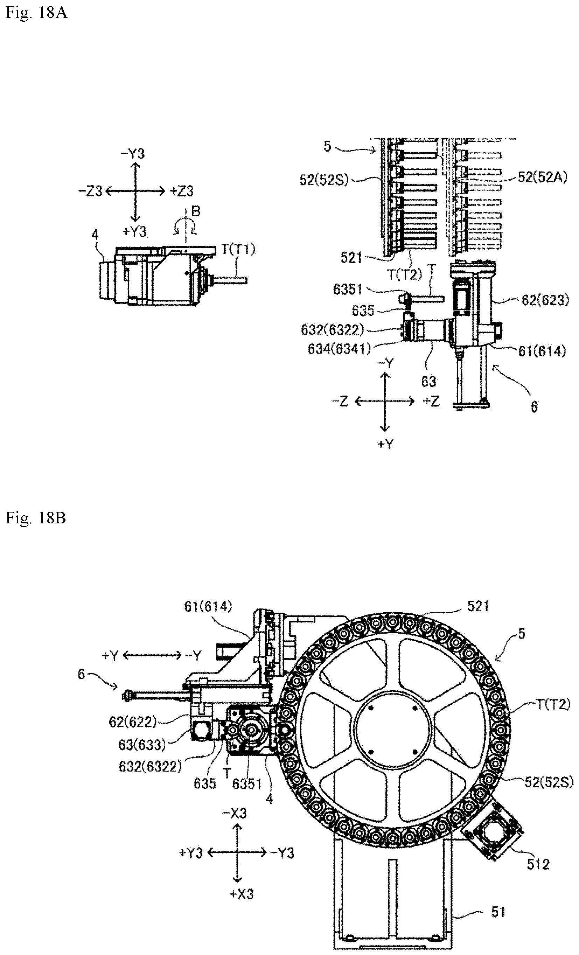

Following step S17, the tool exchange arm 63 performs a +Z movement while the arm rotation shaft 632 is rotated (step S18). FIG. 18A is a plan view showing how the arm rotation shaft 632 rotates and performs a +Z movement in step S18, and FIG. 18B is a right-side view of FIG. 18A. As shown in FIGS. 18A and 18B, in step S18, the arm rotation shaft 632 rotates 90 degrees counterclockwise in FIG. 18B. As a result, the second gripping unit 635 gripping the tool T removed from the tool spindle 4 takes an attitude projecting in the -Y direction. Further, as a result of the +Z movement of the tool exchange arm 63, the tool T removed from the tool spindle 4 is positioned slightly further toward the +Z direction than the pods 521 of the standard tool magazine 52S. Note that at this time, as shown in FIG. 18B, an empty pod 521 not housing a housed tool T2 is disposed furthest toward the +Y side in the standard tool magazine 52S.

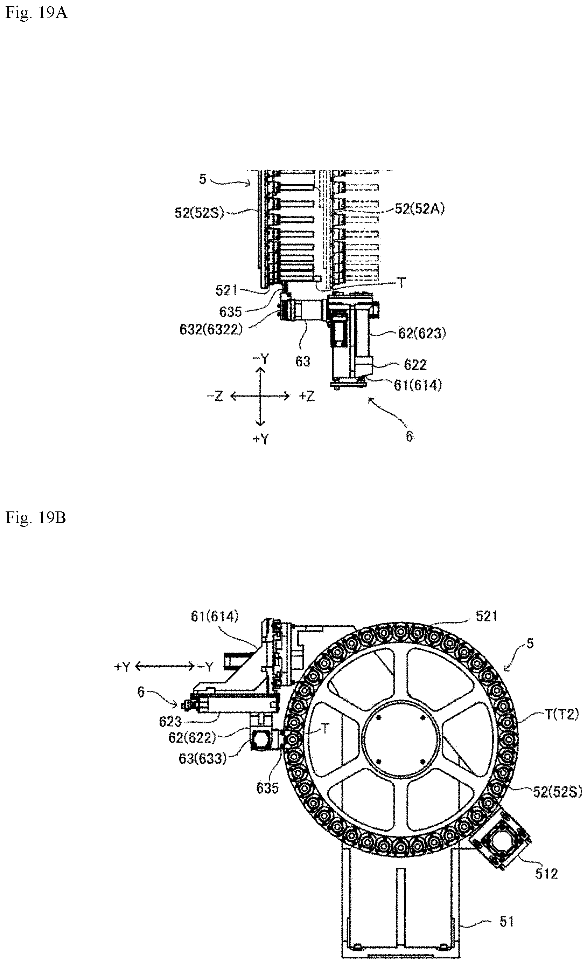

Next, the tool exchange arm 63 performs a -Y movement (step S19). FIG. 19A is a plan view showing how the tool exchange arm 63 performs a -Y movement in step S19, and FIG. 19B is a right-side view of FIG. 19A. Note that in FIGS. 19A and 19B to 25A and 25B, the tool spindle 4 has been omitted. As shown in FIGS. 19A and 19B, in step S 19, the air cylinder 623 causes the piston rod to retreat in the -Y direction, whereby the tool exchange arm 63 performs a -Y movement together with the Y-axis moving platform 622. As a result, the tool T gripped by the second gripping unit 635 is disposed in a position where the shank of the tool T faces the pod 521 positioned furthest toward the +Y side in the standard tool magazine 52S with a slight interval therebetween in the Z-axis direction.

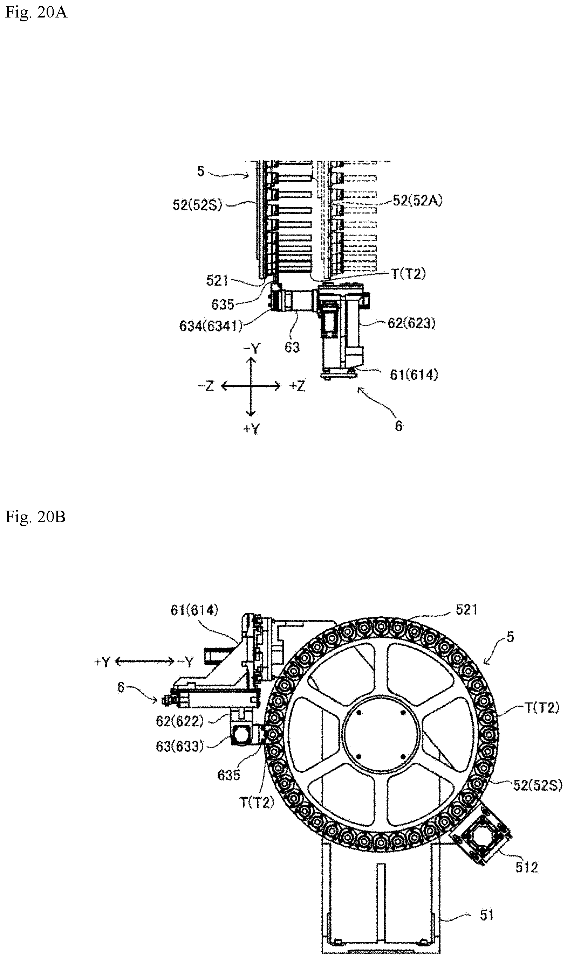

Following step S19, the tool exchange arm 63 performs a -Z movement such that the tool T gripped by the tool exchange arm 63 is housed in the standard tool magazine 52S (step S20). FIG. 20A is a plan view showing how the tool T removed from the tool spindle 4 (see FIG. 1) is inserted into the pod 521 in the standard tool magazine 52S as a result of the -Z movement performed by the tool exchange arm 63 in step S20, and FIG. 20B is a right-side view of FIG. 20A. As shown in FIGS. 20A and 20B, when the tool exchange arm 63 moves in the -Z direction in step S20, the shank of the tool T gripped by the second gripping unit 635 is inserted into the pod 521 positioned furthest toward the +Y side in the standard tool magazine 52S, thereby becoming a housed tool T2 housed in the standard tool magazine 52S.

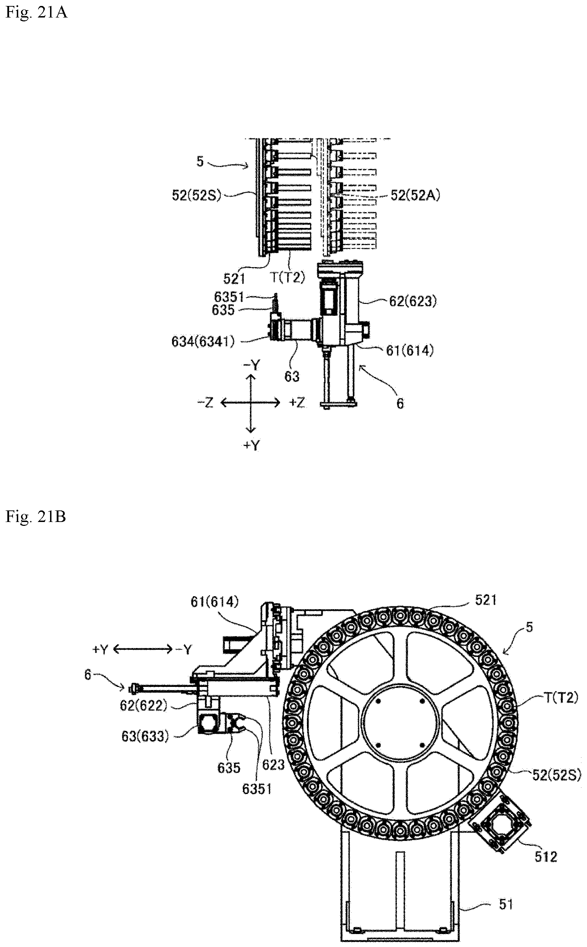

Next, the tool exchange arm 63 performs a +Y movement (step S21). FIG. 21A is a plan view showing how the tool exchange arm 63 releases the housed tool T2 inserted into the standard tool magazine 52S and separates from the standard tool magazine 52S as a result of the +Y movement performed by the tool exchange arm 63 in step S21, and FIG. 21B is a right-side view of FIG. 21A. As shown in FIGS. 21A and 21B, in step S21, the air cylinder 623 causes the piston rod to project in the +Y direction, whereby the tool exchange arm 63 performs a +Y movement together with the Y-axis moving platform 622. As a result, the second gripping unit 635 releases the housed tool T2.

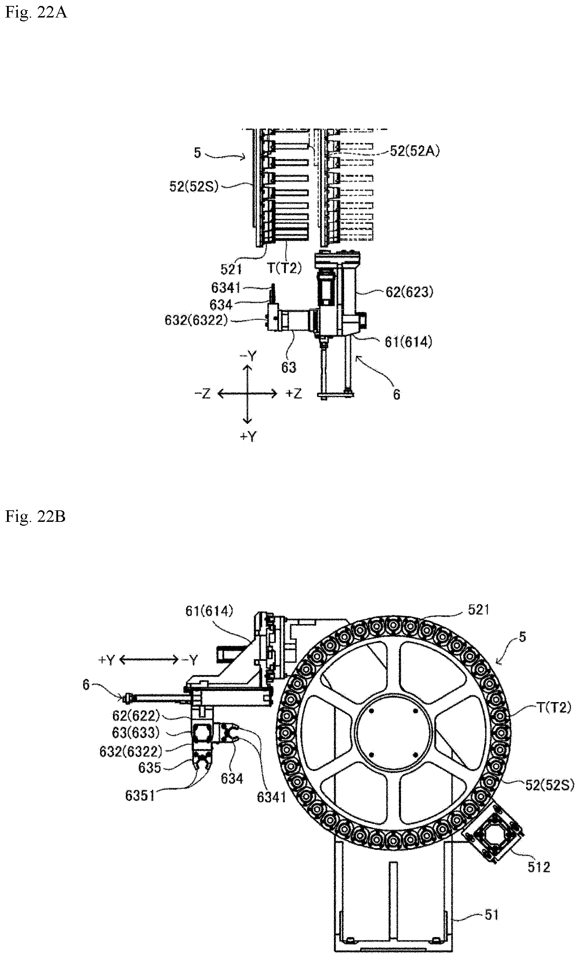

When step S21 is complete, the arm rotation shaft 632 of the tool exchange arm 63 is rotated. Further, the standard tool magazine 52S is rotated in parallel therewith (step S22). FIG. 22A is a plan view showing how the arm rotation shaft 632 is rotated and the standard tool magazine 52S is rotated in step S22, and FIG. 22B is a right-side view of FIG. 22A. As shown in FIGS. 22A and 22B, in step S22, the arm rotation shaft 632 rotates 90 degrees clockwise in FIG. 22B. As a result, the first gripping unit 634 takes an attitude projecting in the -Y direction. Further, when the standard tool magazine 52S rotates, the housed tool T2 to be used for the next machining is disposed furthest toward the +Y side of the standard tool magazine 52S. In other words, the first gripping unit 634 and the housed tool T2 to be used for the next machining are disposed in opposing positions in the Y-axis direction.

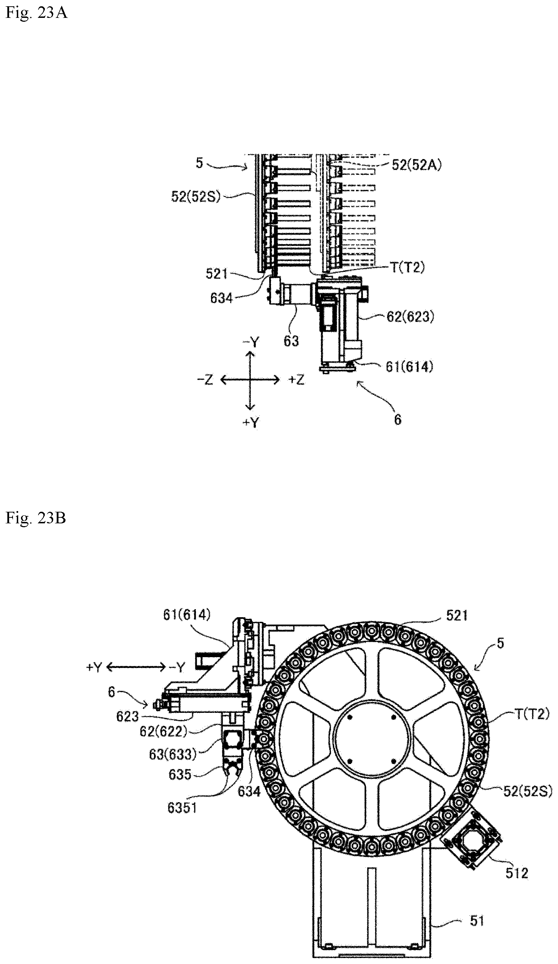

Next, the tool exchange arm 63 performs a -Y movement (step S23). FIG. 23A is a plan view showing how the housed tool T2 housed in the standard tool magazine 52S is gripped by the tool exchange arm 63 as a result of the -Y movement performed by the tool exchange arm 63 in step S23, and FIG. 23B is a right-side view of FIG. 23A. As shown in FIGS. 23A and 23B, in step S23, the air cylinder 623 causes the piston rod to retreat in the -Y direction, whereby the tool exchange arm 63 performs a -Y movement together with the Y-axis moving platform 622.As a result, the first gripping unit 634 grips the housed tool T2 to be used for the next machining.

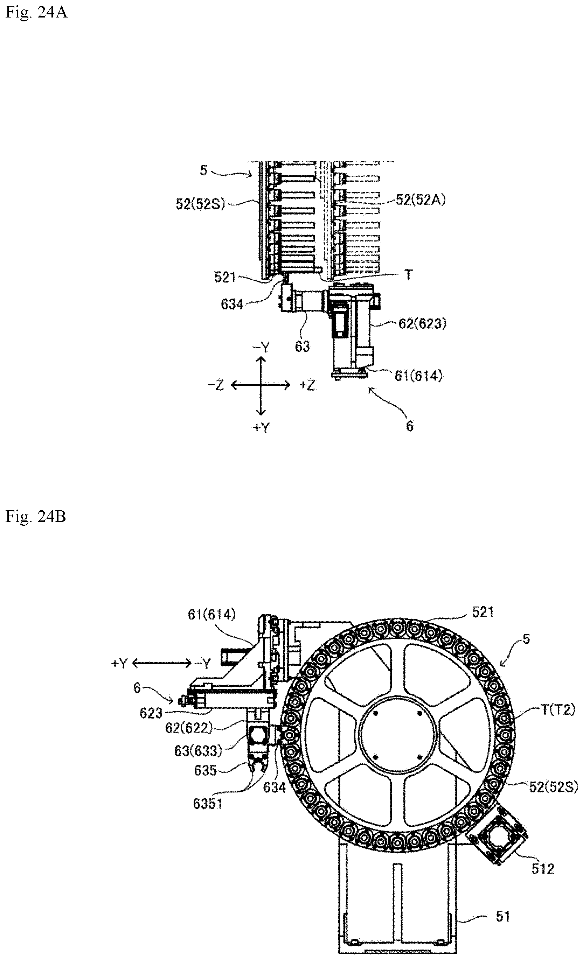

After the first gripping unit 634 grips the housed tool T2, the tool exchange arm 63 performs a +Z movement (step S24). FIG. 24A is a plan view showing how the tool exchange arm 63 removes the tool T from the standard tool magazine 52S as a result of the +Z movement performed by the tool exchange arm 63 in step S24, and FIG. 24B is a right-side view of FIG. 24A. As shown in FIGS. 24A and 24B, as a result of the +Z movement performed by the tool exchange arm 63 in step S24, the tool T gripped by the first gripping unit 634 is removed from the pod 521 of the standard tool magazine 52S.

Following step S24, the tool exchange arm 63 performs a +Y movement (step S25). FIG. 25A is a plan view showing how the tool exchange arm 63 separates from the standard tool magazine 52S by moving in the Y-axis direction in step S25, and FIG. 25B is a right-side view of FIG. 25A. As shown in FIGS. 25A and 25B, in step S25, the air cylinder 623 causes the piston rod to project in the +Y direction, whereby the tool exchange arm 63 performs a +Y movement together with the Y-axis moving platform 622. As a result, the tool T gripped by the first gripping unit 634 separates from the standard tool magazine 52S in the Y-axis direction.

Following step S25, the tool exchange arm 63 performs a -Z movement while the arm rotation shaft 632 is rotated (step S26). As a result, the tool exchange arm 63 takes the position and attitude shown in FIGS. 11A and 11B. In other words, as shown in FIGS. 11A and 11B, in the tool exchange arm 63, the first gripping unit 634 gripping the tool T to be used next takes an attitude projecting in the -X direction, and the second gripping unit 635 takes an attitude projecting in the -Y direction. Further, the tool exchange arm 63 moves to the exchange position and enters a standby state. Thus, the tool exchange operation performed in the machine tool 1 having the basic configuration is completed. Subsequently, when machining using the mounted tool T1 mounted on the tool spindle 4 at that point is completed, the next tool exchange operation is executed.

Next, a tool exchange operation performed in the machine tool 1 including the tool housing apparatus 5 with the additional tool magazine 52A attached and the tool exchanging apparatus 6 with the extension member 61A attached will be described.

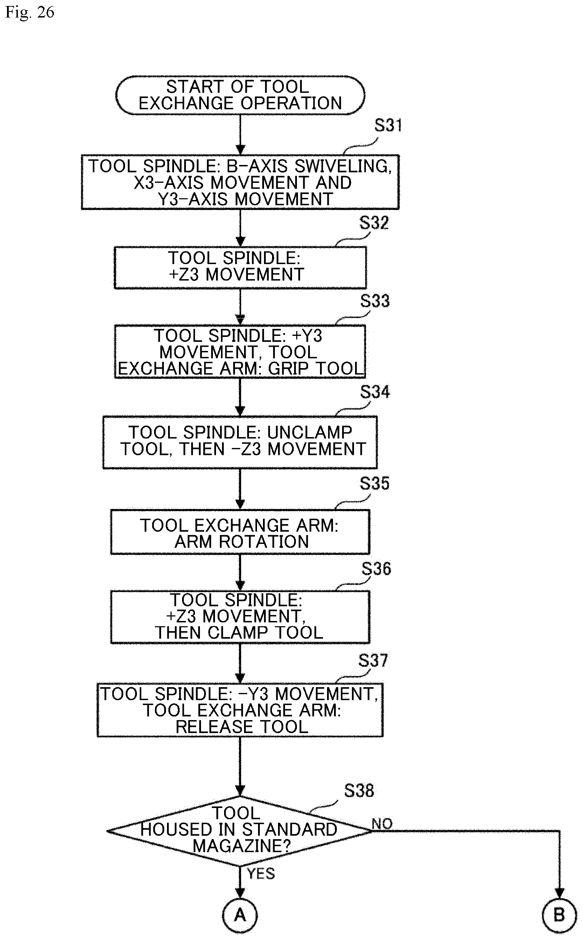

FIG. 26 is a flowchart showing steps S31 to S38 of the tool exchange operation performed in the machine tool 1 including the tool housing apparatus 5 with the additional tool magazine 52A attached and the tool exchanging apparatus 6 with the extension member 61A attached.

As shown in FIG. 26, steps S31 to S37 are identical operations to steps S11 to S17, in which, by moving the tool spindle 4, the second gripping unit 635 of the tool exchange arm 63 is caused to grip the mounted tool T1 mounted on the tool spindle 4 and remove the mounted tool T1 from the tool spindle 4, and the tool T gripped by the first gripping unit 634 is mounted on the tool spindle 4. Note that of these steps, steps S32 and S33 correspond to an example of the gripping movement operation, step S34 corresponds to an example of the removing movement operation, and step S36 corresponds to an example of the mounting movement operation. In the machine tool 1 including the tool housing apparatus 5 with the additional tool magazine 52A attached and the tool exchanging apparatus 6 with the extension member 61A attached, following step S37, a determination is made as to which of the standard tool magazine 52S and the additional tool magazine 52A is housing the tool T gripped by the second gripping unit 635 (step S38).

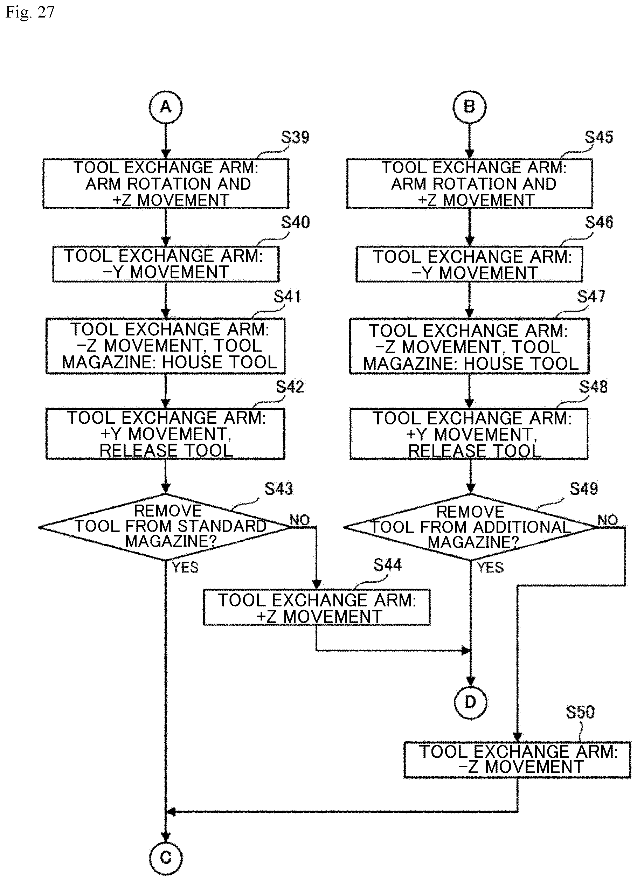

FIG. 27 is a flowchart showing steps S39 to S50 of the tool exchange operation performed in the machine tool 1 including the tool housing apparatus 5 with the additional tool magazine 52A attached and the tool exchanging apparatus 6 with the extension member 61A attached.

Steps S39 to S42, which are executed when it is determined, in step S38, that the tool T gripped by the second gripping unit 635 is housed in the standard tool magazine 52S, are identical operations to step S18 to S21. When step S42 is complete, a determination is made as to whether or not the housed tool T2 to be used next is to be removed from the standard tool magazine 52S (step S43). When it is determined that the housed tool T2 is not to be removed from the standard tool magazine 52S, or in other words that the housed tool T2 is to be removed from the additional tool magazine 52A, the tool exchange arm 63 performs a +Z movement over the separation distance in the Z-axis direction between the standard tool magazine 52S and the additional magazine body 52A1 (see FIG. 5) (step S44).

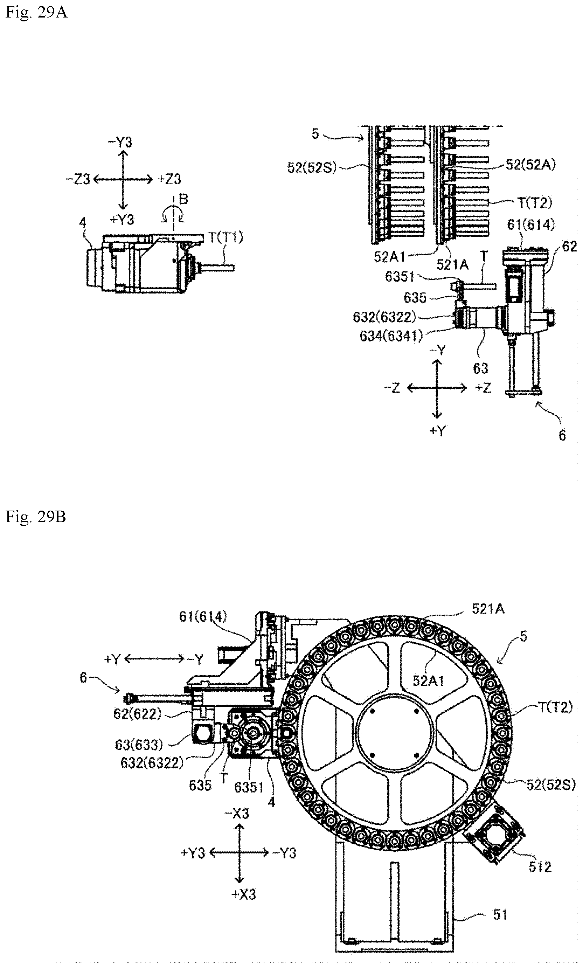

Meanwhile, step S45, which is executed when it is determined, in step S38, that the tool T gripped by the second gripping unit 635 is housed in the additional tool magazine 52A, is an operation that differs from step S18 only in the movement distance of the +Z movement. FIG. 29A is a plan view showing the +Z movement performed as the arm rotation shaft 632 rotates in step S45, and FIG. 29B is a right-side view of FIG. 29A. As shown in FIGS. 29A and 29B, in step S45, the arm rotation shaft 632 rotates 90 degrees counterclockwise in FIG. 29B. As a result, the second gripping unit 635 gripping the tool T removed from the tool spindle 4 takes an attitude projecting in the -Y direction. Further, as a result of the +Z movement of the tool exchange arm 63, the tool T removed from the tool spindle 4 is positioned slightly further toward the +Z direction than the additional pods 521A of the additional tool magazine 52A. In other words, in step S45, the distance of the +Z movement increases in comparison with step S18 by the separation distance in the Z-axis direction between the standard tool magazine 52S and the additional magazine body 52A1. Note that at this time, as shown in FIG. 29B, an empty additional pod 521A not housing a housed tool T2 is disposed furthest toward the +Y side in the additional tool magazine 52A.

Steps S46 to S48 executed after step S45 are identical operations to steps S19 to S21 except that the tool magazine 52 housing the tool T is the additional tool magazine 52A, and therefore description thereof has been omitted.

When step S48 is complete, a determination is made as to whether or not the housed tool T2 to be used next is to be removed from the additional tool magazine 52A (step S49). When it is determined that the housed tool T2 is not to be removed from the additional tool magazine 52A, or in other words is to be removed from the standard tool magazine 52S, the tool exchange arm 63 performs a -Z movement over the separation distance in the Z-axis direction between the standard tool magazine 52S and the additional magazine body 52A1 (step S50).

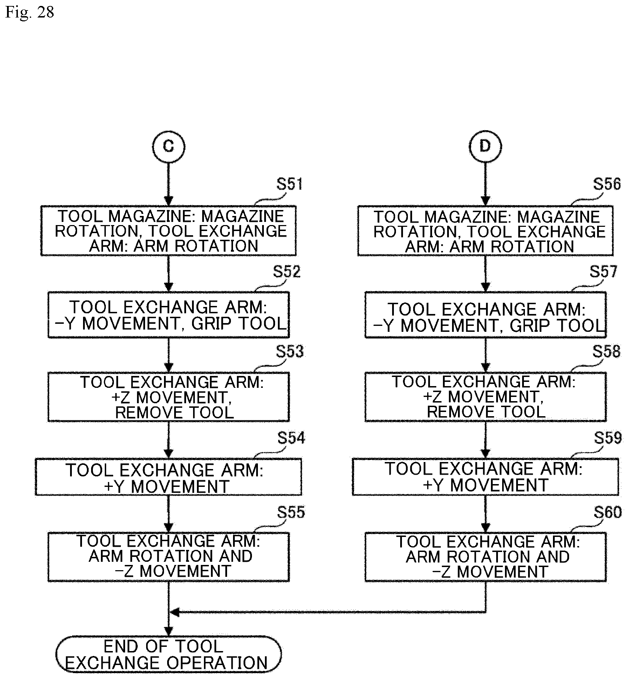

FIG. 28 is a flowchart showing steps S51 to S60 of the tool exchange operation performed in the machine tool 1 including the tool housing apparatus 5 with the additional tool magazine 52A attached and the tool exchanging apparatus 6 with the extension member 61A attached.

When it is determined in step S43 that the housed tool T2 is to be removed from the standard tool magazine 52S and the -Z movement of the tool exchange arm 63 is completed in step S50, next, the arm rotation shaft 632 of the tool exchange arm 63 is rotated. Further, the tool magazine 52 is rotated in parallel therewith (step S51). Note that since the standard tool magazine 52S and the additional tool magazine 52A are both fixed to the magazine rotation shaft 532, the standard tool magazine 52S and the additional tool magazine 52A rotate by the same angle. Step S51 is the same operation as step S22. When step S51 is complete, the tool magazine 52 and the tool exchange arm 63 have the arrangement relationship shown in FIGS. 22A and 22B. In other words, the first gripping unit 634 and the housed tool T2 to be used for the next machining are disposed in opposing positions in the Y-axis direction. Steps S52 to S55 executed next are identical operations to steps S23 to S26.

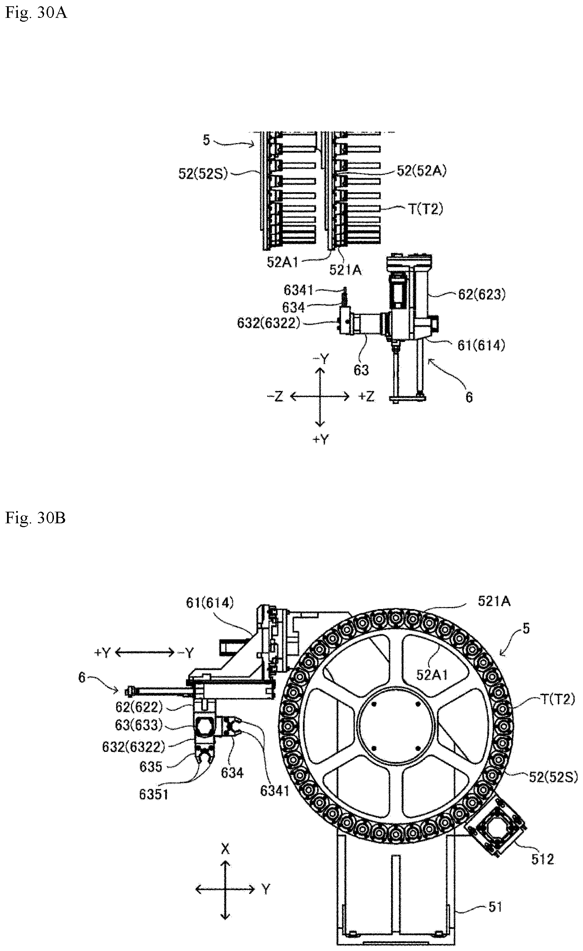

When the +Z movement of the tool exchange arm 63 is completed in step S44 and it is determined that the housed tool T2 is to be removed from the additional tool magazine 52A in step S49, next, the arm rotation shaft 632 of the tool exchange arm 63 is rotated. Further, the tool magazine 52 is rotated in parallel therewith (step S56). FIG. 30A is a plan view showing how the arm rotation shaft 632 is rotated and the tool magazine 52 is rotated in step S56, and FIG. 30B is a right-side view of FIG. 30A. Note that in FIGS. 30A and 30B, the tool spindle 4 has been omitted. As shown in FIGS. 30A and 30B, in step S56, the arm rotation shaft 632 rotates 90 degrees clockwise in FIG. 30B. As a result, the first gripping unit 634 takes an attitude projecting in the -Y direction. Further, as a result of the rotation of the tool magazine 52, the housed tool T2 to be used for the next machining is disposed furthest toward the +Y side of the additional tool magazine 52A. In other words, the first gripping unit 634 and the housed tool T2 to be used for the next machining are disposed in opposing positions in the Y-axis direction. Steps S57 to S60 executed after step S56 are identical operations to steps S23 to S26 except that the housed tool T2 is removed from the additional tool magazine 52A instead of the standard tool magazine 52S, and therefore description thereof has been omitted. Thus, the tool exchange operation performed in the machine tool 1 including the tool housing apparatus 5 with the additional tool magazine 52A attached and the tool exchanging apparatus 6 with the extension member 61A attached is completed. Subsequently, when machining using the mounted tool T1 mounted on the tool spindle 4 at that point is completed, the next tool exchange operation is executed.

According to the machine tool 1 of this embodiment, described above, in the machine tool 1 having the basic configuration, the additional tool magazine 52A and the extension member 61A are not attached, and therefore a size reduction can be achieved, with the result that the installation area of the machine tool 1 and the space occupied thereby can be reduced. Further, when the additional tool magazine 52Ais added, the extension rack 613A can be joined to the Z-axis rack 613 simply by attaching the extension member 61A to the first moving mechanism 61, and as a result, the movement stroke of the tool exchange arm 63 in the +Z direction can be extended. In other words, there is no need for a complicated operation for removing a feed screw and attaching a separate, elongated feed screw, such as that performed in a case where Z-movement is performed using a feed screw. By attaching the additional tool magazine 52A to the +Z direction side of the standard tool magazine 52S, it becomes possible to remove a housed tool T2 from the additional tool magazine 52A and house a used tool T in the additional tool magazine 52A in addition to the standard tool magazine 52S. Thus, with the machine tool 1 of this embodiment, the additional tool magazine 52A can be added easily.

Furthermore, in the machine tool 1 of this embodiment, the gripping movement operation for causing the tool exchange arm 63 to grip the mounted tool T1 is executed by moving the tool spindle 4 while keeping the tool exchange arm 63 stationary. Since the movement of the tool spindle 4 is directly linked to the machining accuracy, the movement precision must be high, which means that it must be easy for the control apparatus to adjust the movement position of the tool spindle 4, and therefore a motor is used as the drive source (the actuator). Hence, the mounted tool T1 can be reliably gripped by the tool exchange arm 63 by adjusting the movement position of the tool spindle 4 using the control apparatus in steps S12 to S13 and steps S32 to S33 without the need to finely adjust the relative positions of the tool spindle 4 and the tool exchanging apparatus 6. Moreover, even when the accuracy of the movement position of the tool exchange arm 63 in the tool exchanging apparatus 6 is low such that variation occurs in movement to the exchange position, the mounted tool T1 can be reliably gripped by the tool exchange arm 63 by adjusting the movement position of the tool spindle 4 using the control apparatus. Accordingly, low-cost mechanisms with low movement accuracy can be used as the first and second moving mechanisms 61 and 62 serving as the moving mechanisms for moving the tool exchange arm 63, and as a result, the tool exchanging apparatus 6 can be constructed at low cost. In the tool exchanging apparatus 6 of this embodiment, a low-cost fluid pressure cylinder (the air cylinder 623) is used as the drive source for moving the tool exchange arm 63 in the Y-axis direction, and therefore the tool exchanging apparatus 6 can be constructed at low cost.

In addition, in the machine tool 1 of this embodiment, the removing movement operation for removing the mounted tool T1 gripped by the tool exchange arm 63 in the gripping movement operation from the tool spindle 4 is executed in step S14 and step S34 by moving the tool spindle 4 while keeping the tool exchange arm 63 stationary. Furthermore, the mounting movement operation for mounting the tool T removed from the tool housing apparatus 5 and gripped by the first gripping unit 634 on the tool spindle 4 is executed in step S16 and step S36 by moving the tool spindle 4 while keeping the tool exchange arm 63 stationary. As a result, the tool exchange arm 63 does not require movement accuracy in either the removing movement operation or the mounting movement operation.

The present invention is not limited to the embodiment described above, and various amendments may be applied thereto within the scope set forth in the claims. For example, in this embodiment, an NC lathe having the tool housing apparatus 5 and the tool exchanging apparatus 6 was described as an example of the machine tool 1, but the present invention may be applied to another machine tool having the tool housing apparatus 5 and the tool exchanging apparatus 6, such as a machining center. Further, the machine tool 1 may include a guide bush for guiding the tip end part of the workpiece W gripped by the spindle 2 slidably in the Z1-axis direction. The machine tool 1 may also include a tool post on which a tool T such as a cutting tool is mounted separately from the tool spindle 4. Note that the opposite spindle 3 may be omitted. In addition, in this embodiment, an example in which the X-axis direction and the X3-axis direction, the Y-axis direction and the Y2-axis direction and Y3-axis direction, and the Z-axis direction and the Z1-axis direction, Z2-axis direction, and Z3-axis direction respectively match was described, but these directions may be different.

Note that constituent elements included only in the descriptions of the modified examples described above may also be applied to other modified examples.

## Claims

1. A machine tool comprising:
a tool spindle on which a tool for machining a workpiece is mounted exchangeably;
a tool housing apparatus having a standard tool magazine in which a plurality of tools to be mounted on the tool spindle are housed; and
a tool exchanging apparatus having a tool exchange arm that grips the tool, and a first moving mechanism that uses a rack and a pinion meshed to the rack to move the tool exchange arm in a first movement direction,
wherein the tool exchanging apparatus includes an extension member attachment unit for attaching an extension member that extends a movement stroke of the tool exchange arm in the first movement direction, and
the tool housing apparatus includes an additional magazine attachment unit for attaching an additional tool magazine that increases the number of housed tools to the first movement direction side of the standard tool magazine.

2. The machine tool according to claim 1, wherein the tool spindle executes a gripping movement operation for moving toward the tool exchange arm and causing the tool exchange arm to grip the tool mounted on the tool spindle.

3. The machine tool according to claim 1 or 2, wherein
the tool exchanging apparatus includes a second moving mechanism for moving the tool exchange arm in a second movement direction that intersects the first movement direction, and the second moving mechanism moves the tool exchange arm in the second movement direction using a fluid pressure cylinder.

4. The machine tool according to claim 1 or 2, wherein
the tool exchange arm includes an arm rotation shaft that is driven to rotate, and a first gripping unit and a second gripping unit that are fixed to the arm rotation shaft so as to each grip a tool, the first gripping unit projects in a radial direction of the arm rotation shaft, and
the second gripping unit projects in the radial direction at an angular interval of less than 180 degrees from the first gripping unit in a rotation direction of the arm rotation shaft.

5. The machine tool according to claim 1 or 2, wherein the tool housing apparatus includes a magazine rotation shaft that rotates the standard tool magazine when driven to rotate, and the additional magazine attachment unit is formed on the magazine rotation shaft.
